(19) Europäisches Patentamt / European Patent Office / Office européen des brevets

(11) EP 3 375 813 A1

(12) **EUROPEAN PATENT APPLICATION**
published in accordance with Art. 153(4) EPC

(43) Date of publication:
**19.09.2018 Bulletin 2018/38**

(21) Application number: **16864577.8**

(22) Date of filing: **10.11.2016**

(51) Int Cl.:
***C08K 3/22*** *(2006.01)* ***C08K 3/00*** *(2018.01)*
***C08J 9/22*** *(2006.01)* ***C08L 25/06*** *(2006.01)*
***C09K 21/02*** *(2006.01)* ***C09K 21/06*** *(2006.01)*

(86) International application number:
**PCT/KR2016/012937**

(87) International publication number:
**WO 2017/082651 (18.05.2017 Gazette 2017/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.11.2015 KR 20150159641**
**13.11.2015 KR 20150159642**
**09.11.2016 KR 20160148925**

(71) Applicant: **Kang, Bum Hyoung**
**Yongin-si, Gyeonggi-do 17138 (KR)**

(72) Inventors:
- **SEO, Kyongwon**
  **Daejeon 34140 (KR)**
- **KANG, Bum Hyoung**
  **Daejeon 34140 (KR)**

(74) Representative: **Noble, Frederick**
**Albright IP Limited**
**County House**
**Bayshill Road**
**Cheltenham, Glos. GL50 3BA (GB)**

(54) **FLAME RETARDANT PARTICLE, MANUFACTURING METHOD THEREFOR, AND FLAME RETARDANT STYROFOAM USING SAME**

(57) The present invention relates to a flame retardant particle having excellent flame retardancy or moisture resistance, a manufacturing method therefor, and a flame retardant Styrofoam using the same.

FIG. 1

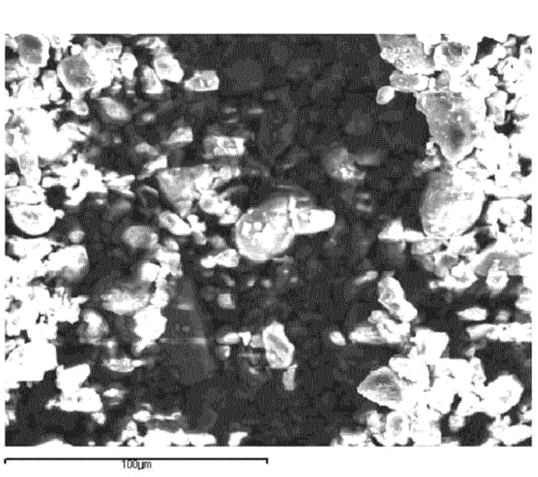


EP 3 375 813 A1

## Description

### [Technical Field]

The present invention relates to a flame retardant particle, a manufacturing method therefor, and flame retardant Styrofoam using the same. More particularly, the present invention relates to a flame retardant particle having excellent flame retardancy or moisture resistance, a manufacturing method therefor, and a flame retardant Styrofoam using the same.

### [Background Art]

Styrofoam (EPS, expandable polystyrene) has an excellent insulation effect as a porous material and is light and easily molded and thus is widely used as an insulating material. Particularly, a so-called sandwich panel including Styrofoam as a core material and a metal plate attached to both sides thereof is light, inexpensive, and quickly installed and has an excellent insulation effect, and accordingly, is widely used as a building material. In addition, an exterior insulating and finishing system (EIFS) of attaching a Styrofoam insulating material to an outer wall of a building for finishing, called drivit construction, is easily and simply applied and thus shortens a construction period and is inexpensive, and accordingly is widely used for multi-household homes or residential-commercial complexes.

However, Styrofoam is very weak with respect to heat as it is a combustible material and thus has a problem of being deformed at 70 °C or higher, generating much toxic gas during a fire, and causes structural collapse. Particularly, vertically installed Styrofoam may play a role of kindling a fire and thus spreading a flame.

Accordingly, research on a flame retardant added to a raw resin and showing flame retardancy is being actively undertaken. Currently, flame retardants are mostly halogen-based, but as for a non-halogen-based flame retardant, a phosphorus-based flame retardant and a nitrogen-based flame retardant are widely used. As for the halogen-based flame retardant, a bromide flame retardant is inexpensive and has a high retardant effect and thus is widely used, and HBCD (hexabromocyclododecane) is most widely applied to Styrofoam among the bromide flame retardants.

However, use of some of the bromide flame retardants has been prohibited for a long time due to carcinogenicity and hepatotoxicity, and in addition, use of some currently used bromide flame retardants will be soon prohibited, as their harmful influence on brain development of children and the like are known.

In order to replace this bromide flame retardant, a nitrogen-based or phosphorus-based flame retardant and the like as the non-halogen-based flame retardant is being developed and applied, but shows much deteriorated flame retardancy and is expensive compared with the bromide flame retardant. Accordingly, development of a flame retardant having excellent flame retardancy and being safe and inexpensive is required.

### [DISCLOSURE]

### [Technical Problem]

The present invention provides a flame retardant particle having excellent flame retardancy or moisture resistance.

### [Technical Solution]

The present invention provides a method of manufacturing the flame retardant particle.

The present invention provides a flame retardant Styrofoam using the flame retardant particle.

In the present specification, a flame retardant particle includes a dry gel including at least one inorganic particle selected from cenospheres, fly ash, ceramic microspheres, cleaned ash, and unburned carbon, and includes a peak having a chemical shift of -91 ppm to -95 ppm in a $^{29}$Si NMR spectrum.

In the present specification, a method of manufacturing a flame retardant particle includes: heat-treating a flame retardant composition including at least one inorganic particle selected from cenospheres, fly ash, ceramic microspheres, cleaned ash, and unburned carbon, and an inorganic binder having viscosity at 20 °C of less than 100,000 cP, at a temperature of 60 °C to 200 °C; and pulverizing the resulting material after the heat-treating.

In the present specification, a flame retardant Styrofoam is provided, including: a polystyrene foamed particle; and a flame retardant layer formed on the polystyrene foamed particle and including the flame retardant particle.

Hereinafter, the flame retardant particle, the method of manufacturing the same, and the flame retardant Styrofoam using the same according to a specific embodiment of the present invention are illustrated in detail.

According to an embodiment of the invention, a flame retardant particle includes a dry gel including at least one inorganic particle selected from cenospheres, fly ash, ceramic microspheres, cleaned ash, and unburned carbon,

and includes a peak having a chemical shift of -91 ppm to -95 ppm in a $^{29}$Si NMR spectrum.

The present inventors confirmed that excellent flame retardancy may be realized by using the aforementioned particular flame retardant particle including a particular inorganic particle, and the flame retardancy effect may be maximized by increasing a contact area through pulverization into particles, and completed the present invention.

Specifically, the flame retardant particle according to the embodiment may include a dry gel including at least one inorganic particle selected from cenospheres, fly ash, ceramic microspheres, cleaned ash, and unburned carbon.

The inorganic particle may include an oxide of at least one metal selected from sodium, silicon, aluminum, iron, calcium, and magnesium. In other words, the inorganic particle may include sodium oxide, silicon oxide, aluminum oxide, iron oxide, calcium oxide, magnesium oxide, or a mixture of two or more thereof.

The flame retardant particle may be derived from an inorganic particle and an inorganic binder which will be described later, and is obtained by mixing the inorganic particle and the inorganic binder and then heat-treating and pulverizing the mixture.

The dry gel may include a cross-linked (co)polymer of at least two inorganic particles. The (co)polymer all includes a polymer and a copolymer. A method of cross-linking the at least two ceramic compounds is not particularly limited, but may include, for example, cross-linking through a covalent bond or a molecular bond.

The covalent bond may be formed by using a polyvalent functional group including at least one central element selected from carbon, silicon, nitrogen, oxygen, phosphorus, and sulfur as a medium. The polyvalent functional group is a functional group including at least two linking points, and when the number of linking points is two, the functional group becomes divalent, and when the number of linking points is three, the functional group becomes trivalent.

Specifically, one linking point of the polyvalent functional group including at least one central element selected from carbon, silicon, nitrogen, oxygen, phosphorus, and sulfur may form a bond with at least one metal selected from sodium, silicon, aluminum, iron, calcium, and magnesium included in one inorganic particle, and another linking point thereof may form a bond with at least one metal selected from sodium, silicon, aluminum, iron, calcium, and magnesium included in another inorganic particle.

Specific examples of the polyvalent functional group including at least one selected from carbon, silicon, nitrogen, oxygen, phosphorus, and sulfur may include a methylene group, a carbonyl group, an ester group, an amide group, an ether group, an amino group, an azo group, and the like, and preferably an ether group.

The polyvalent functional group including at least one selected from carbon, silicon, nitrogen, oxygen, phosphorus, and sulfur may be introduced by a cross-linking agent additionally added thereto or a functional group included in the inorganic particle.

In addition, examples of the molecular bond may include a hydrogen bond, a dispersion force, and the like among the at least two inorganic particles.

On the other hand, the flame retardant particle may include a peak having a chemical shift of -91 ppm to -95 ppm, or -92 ppm to -93 ppm, in a $^{29}$Si NMR spectrum. This particular chemical shift peak may be realized by the inorganic particle or a cross-linked (co)polymer of the aforementioned at least two inorganic particles included in the dry gel. The peak is a point where an instant variation ratio of intensity relative to the chemical shift becomes 0 in the $^{29}$Si NMR spectrum of FIG. 6 having the chemical shift as a horizontal axis and intensity as a vertical axis, and specifically a point where the instant variation ratio of intensity relative to the chemical shift turns from a positive value into a negative value as the chemical shift increases toward the positive value.

The flame retardant particle has a maximum diameter ranging from 0.01 $\mu$m to 1000 $\mu$m. In this way, as the flame retardant particle has a minute diameter, a volume decreases and a contact surface area increases, and accordingly a retardancy effect may be improved by including a relatively large amount of the flame retardant particle during the post-described manufacture of a flame retardant Styrofoam.

A shape of the flame retardant particle is not particularly limited but may include a spherical shape, an oval shape, a polyhedral shape, and the like as shown in FIG. 1, and a cross-section of the flame retardant particle may include a circle, an oval, and 3 to 50 polygons.

Specific examples of the inorganic particle may include cenospheres, fly ash, ceramic microspheres, cleaned ash, unburned carbon, or a mixture of at least two thereof among coal ashes.

The dry gel included in the flame retardant particle of the embodiment may further include 1 part by weight to 50 parts by weight of titanium oxide relative to 100 parts by weight of the inorganic particle. Specific examples of the titanium oxide may include titanium dioxide ($TiO_2$), and the titanium oxide works as a optical catalyst and has a bond with a silica ($SiO_2$) component included in an inorganic particle and the like, and thus may increase durability of the particle surface.

In addition, the dry gel included in the flame retardant particle according to the embodiment may further include a siloxane-based polymer. The present inventors found that the aforementioned particular flame retardant particle may not only include a ceramic-based material and thus realize excellent flame retardancy, but may also include a siloxane-based polymer and thus improve resistance to moisture, and in addition, that flame retardancy and moisture resistance effects may be maximized as a contact area increases through pulverization into particles.

The siloxane-based polymer is a polymer including a siloxane bond in a main chain, and may be hydrophobic and thus improve moisture resistance. The siloxane-based polymer may have a weight average molecular weight of 4000 g/mol to 10,000 g/mol or 5000 g/mol to 8000 g/mol.

The weight average molecular weight denotes a polystyrene-reduced weight average molecular weight measured in a GPC method. When the polystyrene-reduced weight average molecular weight is measured in the GPC method, a detector such as a generally-known analyzer, a refractive index detector, and the like and a column for analysis may be used, and in addition, a generally-applied temperature condition, solvent, and flow rate may be applied thereto. Specific examples of the measurement condition may be 30 °C, a chloroform solvent, and a flow rate of 1 mL/min.

Specifically, the siloxane-based polymer may include polydimethylsiloxane. The polydimethylsiloxane may include a polysiloxane polymer as a main chain and two methyl groups bound to a silicon atom as a branched chain. More specifically, the polydimethylsiloxane may be represented by Chemical Formula 1.

[Chemical Formula1]

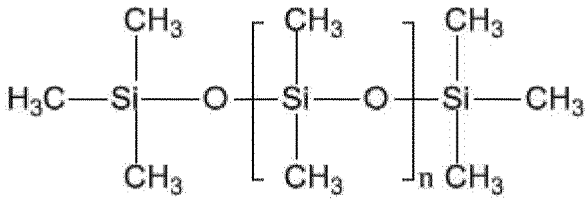

In Chemical Formula 1, n is an integer of 1 or greater.

The siloxane-based polymer may have viscosity of 0.65 cps to 10,000 cps, 10 cps to 1000 cps, or 50 cps to 200 cps, which is measured at 20 °C.

In the dry gel, the siloxane-based polymer may be present as a mixture with the inorganic particle. Accordingly, the flame retardant particle may be hydrophobic by the siloxane-based polymer and thus realize excellent moisture resistance.

The flame retardant particle may further include at least one additive selected from an inorganic filler, a flame retardant auxiliary agent, a hydrophobization agent, a curing agent, a dispersing agent, and a cross-linking agent. Specific examples of the additives are not particularly limited, and for example, the inorganic filler may include aluminum sulfate and the like. The aluminum sulfate may promote gelation of the inorganic binder and increase an amount of an aluminum component. The aluminum sulfate may be added in an aqueous solution state, and may be included in an amount of 1 part by weight to 20 parts by weight based on 100 parts by weight of the inorganic particle.

The flame retardant auxiliary agent may include graphite, expanded graphite, carbon black, activated carbon, zeolite expanded vermiculite, diatomite, silica aerogel, perlite, copper, aluminum powder, and the like, and is preferably carbon black in terms of an increase of the amount of carbon atoms and a flexibility increase of the inorganic particle. The carbon black may be included in an amount of 1 part by weight to 50 parts by weight based on 100 parts by weight of the inorganic particle.

The hydrophobization agent may include calcium phosphate, potassium phosphate, or the like, and may be used in an amount of 1 part by weight to 20 parts by weight based on 100 parts by weight of the inorganic particle.

The curing agent may include quicklime, calcium hydroxide, calcium carbonate, and the like, and the dispersing agent may include a titanium-based dispersing agent including a titanium element.

On the other hand, according to another embodiment of the invention, a method of manufacturing a flame retardant particle includes: heat-treating a flame retardant composition including at least one inorganic particle selected from cenospheres, fly ash, ceramic microspheres, cleaned ash, and unburned carbon, and an inorganic binder having viscosity at 20 °C of less than 100,000 cP, at a temperature of 60 °C to 200 °C; and pulverizing the resulting material after the heat-treating.

Specifically, the method of manufacturing a flame retardant particle may include heat-treating a flame retardant composition including at least one inorganic particle selected from cenospheres, fly ash, ceramic microspheres, cleaned ash, and unburned carbon, and an inorganic binder having viscosity at 20 °C of less than 100,000 cP, at a temperature of 60 °C to 200 °C.

The flame retardant composition may include an inorganic binder having viscosity of less than 100,000 cP, greater than or equal to 100 cP and less than 100,000 cP, or greater than or equal to 5000 cP and less than 100,000 cP at 20 °C. As described above, the inorganic binder has flame retardancy and may secure ease of mixing with the inorganic particle through the viscosity.

The viscosity denotes a tackiness degree of a liquid, and the inorganic binder included in the flame retardant composition satisfies viscosity of less than 100,000 cP and thus may be easily mixed with the inorganic particle.

When the inorganic binder has extremely increased viscosity of greater than or equal to 100,000 cP, it is difficult to mix the inorganic binder with the inorganic particle and thus may have a negative influence on preparing a flame retardant composition.

The inorganic binder may include liquid sodium silicates. The liquid sodium silicate is also called waterglass, and when subjected to fire, the liquid sodium silicate may swell and exhibit flame retardancy.

The liquid sodium silicate may have a mole ratio of greater than or equal to 2.25 or in a range of 2.25 to 4.50 or 2.25 to 2.6 according to Equation 1.

[Equation 1]

$$\text{Mole Ratio} = \{SiO_2\ (wt\%)/Na_2O\ (wt\%)*1.032\}$$

The liquid sodium silicate may, for example, include silicon dioxide ($SiO_2$) in an amount of 30 wt% to 40 wt% and sodium oxide ($Na_2O$) in an amount of 10 wt% to 20 wt%, and their mole ratio according to Equation 1 may satisfy greater than or equal to 2.25. The liquid sodium silicate may be classified into KS standards 1 to 4, and the KS standards 2 to 4 excluding the KS standard 1 satisfies a mole ratio of greater than or equal to 2.25.

When the mole ratio according to Equation 1 is decreased to less than 2.25, the inorganic binder may be difficult to mix with the inorganic particle as viscosity of the inorganic binder increases, and thus may have a negative influence on preparation of a flame retardant composition.

In addition, the flame retardant composition may include the inorganic particle. The inorganic particle may impart moisture resistance to the inorganic binder through a binding force with the inorganic binder in a state of being mixed with the inorganic binder in the flame retardant composition.

The inorganic particle may include an oxide of at least one metal selected from sodium, silicon, aluminum, iron, calcium, and magnesium. That is, the inorganic particle may include sodium oxide, silicon oxide, aluminum oxide, iron oxide, calcium oxide, magnesium oxide, or a mixture of two or more thereof.

Specific examples of the inorganic particle may be cenospheres, fly ash, ceramic microspheres, cleaned ash, unburned carbon, or a mixture of two or more thereof.

Particularly, the cenospheres may have a core-shell structure including a core including nitrogen gas or carbon dioxide gas and a shell including silica or alumina. Accordingly, since the external surface of the cenosphere particle is exposed with the ceramic material such as silica or alumina, the cenosphere particle has excellent miscibility with the inorganic binder and a strong binding force therewith. The cenospheres have a spherical shape produced during combustion of coal, and may have a diameter of 100 mesh to 1000 mesh, or 500 mesh to 1000 mesh.

The cenosphere particle has an average diameter of 100 mesh to 400 mesh, and may be pulverized to have a diameter of 500 mesh to 1000 mesh. When the cenosphere particle has a smaller diameter of 500 mesh to 1000 mesh, an amount of the cenosphere particle is increased in the flame retardant composition and thus may secure excellent flame retardancy.

The cenosphere is a porous inorganic material including silicon dioxide ($SiO_2$) at 40 wt% to 70 wt%, aluminum oxide ($Al_2O_3$) at 10 wt% to 50 wt%, iron oxide ($Fe_2O_3$) at 0.1 wt% to 10 wt%, calcium oxide (CaO) at 0.1 wt% to 10 wt%, and magnesium oxide (MgO) at 0.1 wt% to 10 wt%, and may have specific gravity of 0.5 to 1.0 by forming a hollow core internally including nitrogen gas and the like. In addition, since the cenosphere may be inexpensively purchased by recycling industrial waste, the flame retardant composition is environmentally-friendly and inexpensive and thus is economical compared with a conventional non-halogen-based flame retardant.

The flame retardant composition may further include 1 part by weight to 50 parts by weight of titanium oxide relative to 100 parts by weight of the inorganic particle. In addition, the flame retardant composition may further include a siloxane-based polymer.

Specifications of the titanium oxide and the siloxane-based polymer included in the flame retardant composition are the same as aforementioned in the embodiment.

The flame retardant composition may include 0.1 part by weight to 10 parts by weight of the siloxane-based polymer based on 100 parts by weight of the inorganic binder. The siloxane-based polymer is included in an amount of 0.1 part by weight based on 100 parts by weight of the inorganic binder, and if an amount of the siloxane-based polymer is excessively decreased, a moisture-resistance-improving effect of the siloxane-based polymer may be difficult to realize. On the other hand, when the siloxane-based polymer is included in an amount of greater than 10 parts by weight based on 100 parts by weight of the inorganic binder, compatibility of the inorganic binder with the siloxane-based polymer is decreased, and thus the inorganic binder may be difficult to mix with the siloxane-based polymer.

The flame retardant composition may include the inorganic particle in an amount of 10 parts by weight to 100 parts by weight, 10 parts by weight to 50 parts by weight, or 12 parts by weight to 30 parts by weight based on 100 parts by weight of the inorganic binder. When the inorganic particle is included in an amount of 10 parts by weight based on

100 parts by weight of the inorganic binder, as an amount of the inorganic binder is excessively increased, the mixture may be difficult to dry. On the other hand, when the inorganic particle is included in an amount of greater than 100 parts by weight based on 100 parts by weight of the inorganic binder, the inorganic binder may be difficult to mix with the inorganic particle.

The flame retardant composition may further include at least one additive selected from an inorganic filler, a flame retardant auxiliary agent, a hydrophobization agent, a curing agent, a dispersing agent, and a cross-linking agent. Specific examples of the additives are not particularly limited, but, for example, the inorganic filler may be aluminum sulfate or the like. The aluminum sulfate may promote gelation of the inorganic binder and increase an amount of an aluminum component. The aluminum sulfate may be added in an aqueous solution state, and may be included in an amount of 1 part by weight to 20 parts by weight based on 100 parts by weight of the inorganic particle.

The flame retardant auxiliary agent may include graphite, expanded graphite, carbon black, activated carbon, zeolite expanded vermiculite, diatomite, silica aerogel, perlite, copper, aluminum powder, and the like, and preferably carbon black in terms of an increase of the amount of carbon and a flexibility increase of the inorganic particle. The carbon black may be included in an amount of 1 part by weight to 50 parts by weight based on 100 parts by weight of the inorganic particle.

The hydrophobization agent may be calcium phosphate, potassium phosphate, or the like, and may be included in an amount of 1 part by weight to 20 parts by weight based on 100 parts by weight of the inorganic particle.

In heat-treatment of the flame retardant composition, the flame retardant composition may be dried to remove a solvent such as water and the like included in the inorganic binder, and simultaneously, to lead a gelation reaction among internal components.

Specifically, the heat treatment of the flame retardant composition may be performed at 60 °C to 200 °C. When the heat treatment is performed at less than 60 °C, the drying effect may be insufficient, and thus drying time may be extremely increased. When the heat treatment is performed at greater than 200 °C, the surface alone may be extremely dried, and thus properties of a final product may be deteriorated. Specific examples of the heat-treatment are not particularly limited, but for example, may include use of infrared ray radiation, hot air, steam, microwave radiation, or ultraviolet ray radiation. The heat-treatment may be performed for 0.1 hours to 10 hours.

In addition, the heat treatment of the flame retardant composition may be performed while the flame retardant composition is stirred at a speed of 100 rpm to 200 rpm. Accordingly, the flame retardant particle according to an embodiment may be easily formed.

In addition, the method of manufacturing a flame retardant particle may include pulverizing the resulting material after heat-treating. In this way, the resulting material after the heat treatment has a minute diameter and thus a reduced volume as well as an increased contact surface area, and a relatively large amount of the flame retardant particle is included during manufacture of a flame retardant Styrofoam which will be described later, and an improved retardant effect may be realized.

Specifically, in the pulverization, the flame retardant particle may be pulverized to have a diameter ranging from 0.01 μm to 1000 μm. The pulverization may use any method selected without a particular constitutional limit as long as it is used for general pulverization. For example, the pulverization may be performed by using any pulverization device selected from a pin mill, a hammer mill, a screw mill, a roll mill, a ball mill, and the like.

On the other hand, before heat-treating the flame retardant composition at 60 °C to 200 °C, heat treatment of at least one inorganic particle selected from cenospheres, fly ash, ceramic microspheres, cleaned ash, and unburned carbon at 500 °C to 1000 °C may be further included. When the inorganic particle is heat-treated at 500 °C to 1000 °C, the inorganic particle may be softened while color-changed through the heat treatment. Specifically, the inorganic particle may be heat-treated at 500 °C to 1000 °C for 1 minute to 20 minutes or 5 minutes to 15 minutes.

On the other hand, according to another embodiment of the present invention, a flame retardant Styrofoam is provided, including: a polystyrene foamed particle; and a flame retardant layer formed on the polystyrene foamed particle and including a flame retardant particle according to the embodiment.

The flame retardant Styrofoam may be easily processed with a knife line or a heat line without a twist and have moisture resistance and flame retardancy and thus generate a small amount of gas, and when set on fire, the fire may not spread but may be extinguished.

The flame retardant Styrofoam has flame retardancy that is higher than an original heat resistance temperature of a foam resin and thus may be used as a filler for molding a thermoplastic resin or a molding aid, and in addition, may be precisely mixed into a cement product to effectively apply lightness and insulation thereto, and may be used as a heat insulating material for building.

The flame retardant Styrofoam may include polystyrene foamed particles. The polystyrene foamed particle is a spherically-shaped particle formed by foaming a polystyrene resin and internally impregnating a forming agent, and has a particle diameter ranging from 2 mm to 100 mm, 3 mm to 50 mm, or 3 mm to 10 mm.

A flame retardant layer including a flame retardant particle according to the embodiment may be formed on the polystyrene foamed particle. The description of the flame retardant particle may be the same as illustrated in the embodiment. The flame retardant layer includes the flame retardant particle dispersed on the surface of the polystyrene foamed particle, and may have a thickness ranging from 0.01 μm to 100 mm.

The flame retardant Styrofoam may be included in an amount of 10 parts by weight to 500 parts by weight based on 100 parts by weight of the polystyrene foamed particles. When an amount of the flame retardant particles is excessively reduced to 10 parts by weight based on 100 parts by weight of the polystyrene foam, a flame-retardancy-improving effect of the flame retardant Styrofoam may be sufficiently realized due to the reduction of the number of flame retardant particles.

On the other hand, when an amount of the flame retardant particles is increased to greater than 500 parts by weight based on 100 parts by weight of the polystyrene foam, the flame retardant particles are excessively added and thus a loss of the flame retardant particles may be increased.

On the other hand, the flame retardant Styrofoam may further include an adhesive layer between the polystyrene foamed particles and the flame retardant layer. The adhesive layer may include at least one resin selected from a thermosetting resin and a thermoplastic resin, and examples of the thermosetting resin are not particularly limited, but may include, for example, a phenolic resin, a urethane resin, an epoxy resin, and the like, and examples of the thermoplastic resin are also not particularly limited, but may include, for example, an acrylic resin, a vinyl-based resin, a melamine resin, and the like. Specific examples of the vinyl-based resin may include a polyvinyl acetate resin, a polyvinyl alcohol resin, a polyethylene vinyl acetate copolymer resin, and the like.

The flame retardant Styrofoam may further include at least one other flame retardant layer on the flame retardant layer. In other words, the flame retardant layer is formed on the polystyrene foamed particles, and may further include an adhesive layer formed among a plurality of flame retardant layers.

That is, the adhesive layer may directly bind the plurality of flame retardant layers as a medium between the flame retardant layers. Specific examples of the flame retardant Styrofoam may include: a polystyrene foamed particle; a first adhesive layer on the polystyrene foamed particle; a first flame retardant layer on the first adhesive layer and including the flame retardant particle according to the embodiment; a second adhesive layer on the first flame retardant layer; and a second flame retardant layer on the first adhesive layer and including the flame retardant particle according to the embodiment.

Herein, the first flame retardant layer and the second flame retardant layer may be the same as or different from each other, and the first adhesive layer and the second adhesive layer also may be the same as or different from each other.

The flame retardant Styrofoam may further include a surface layer formed on the outermost surface of the flame retardant Styrofoam and including a siloxane-based polymer. The flame retardant Styrofoam includes the surface layer and thus may realize excellent moisture resistance.

The surface layer may include a siloxane-based polymer, and the siloxane-based polymer may include 0.1 part by weight to 20 parts by weight of the flame retardant particle based on 100 parts by weight of the polystyrene foamed particle. The siloxane-based polymer has the same specifications as illustrated in the embodiment.

The surface layer may be formed on the outermost surface of the flame retardant Styrofoam. The outermost surface is positioned most outside from the center of the flame retardant Styrofoam, and may determine surface characteristics of the flame retardant Styrofoam.

In other words, the surface layer may be formed on the flame retardant layer included in the flame retardant Styrofoam. That is, the flame retardant Styrofoam may include: a polystyrene foamed particle; a flame retardant layer formed on the polystyrene foamed particle and including a flame retardant particle according to the embodiment; and a surface layer formed on the flame retardant layer and including a siloxane-based polymer.

When there is at least one flame retardant layer, the surface layer may be formed on the outermost surface of a flame retardant layer present most outside. Specific examples of the flame retardant Styrofoam may include: a polystyrene foamed particle; a first adhesive layer formed on the polystyrene foamed particle; a first flame retardant layer formed on the first adhesive layer and including a flame retardant particle according to the embodiment; a second adhesive layer formed on the first flame retardant layer; a second flame retardant layer formed on the first adhesive layer and including a flame retardant particle according to the embodiment; and a surface layer formed on the second flame retardant layer and including a siloxane-based polymer.

A method of forming the flame retardant layer on the polystyrene foamed particle is not particularly limited, but may include, for example, a method of mixing the polystyrene foamed particle and the flame retardant particle, a method of mixing an unfoamed polystyrene resin and the flame retardant particle and foaming the polystyrene resin, and the like.

Specifically, according to a first embodiment of manufacturing the flame retardant Styrofoam, a method of manufacturing a flame retardant Styrofoam is provided, including heat-treatment of a mixture of the polystyrene foamed particle and the flame retardant particle.

The flame retardant particle has the same specifications as illustrated in the embodiment. The polystyrene foamed particle is a spherically-shaped particle formed by foaming a polystyrene resin while internally impregnating a forming agent, and has a particle diameter of 2 mm to 100 mm, 3 mm to 50 mm, or 3 mm to 10 mm.

The flame retardant Styrofoam-manufacturing method may further include foaming a foamable polystyrene resin before heat-treating the mixture of the polystyrene foamed particle and the flame retardant particle. The foamable polystyrene resin has the same specifications as illustrated in the flame retardant Styrofoam manufacturing method according to the previous embodiment.

The foaming of the foamable polystyrene resin may include heat treatment of the foamable polystyrene resin at 50°C to 200 °C or 100°C to 110 °C. Specifically, the heat treatment of the foamable polystyrene resin may be performed for 20 seconds to 200 seconds. In the foaming, the foamable polystyrene resin may be foamed to have an expanded volume compared with that of the foamable polystyrene resin.

The foaming of the foamable polystyrene resin may be performed under a pressure of 0.05 kg/cm$^2$ to 1 kg/cm$^2$, 0.1 kg/cm$^2$ to 0.5 kg/cm$^2$, or 0.1 kg/cm$^2$ to 0.4 kg/cm$^2$.

The foaming of the foamable polystyrene resin may be performed under a dry or wet condition, and preferably under the wet condition. Examples of the wet condition may include contacting a vapor, and specifically a vapor at 50 °C to 200 °C under a pressure of 0.05 kg/cm$^2$ to 1 kg/cm$^2$, with the foamable polystyrene resin. Examples of the vapor are not particularly limited, but various materials that are widely used in a wet process may be used without a particular limit.

After foaming under the wet condition, drying for 1 hour to 2 hours may be further included.

The mixture of the polystyrene foamed particle and the flame retardant particle may include 0.1 part by weight to 5 parts by weight or 0.3 parts by weight to 3 parts by weight of the flame retardant particle based on 1 part by weight of the polystyrene foamed particle. When an amount of the flame retardant particle is excessively reduced to 0.1 part by weight based on 1 part by weight of the polystyrene foamed particle, a flame retardancy-improving effect may be sufficiently realized due to the reduction of the flame retardant particle.

On other hand, when the amount of the flame retardant particle is excessively increased to 5 parts by weight based on 1 part by weight of the polystyrene foamed particle, the polystyrene foamed particle is difficult to mix with the flame retardant particle, formability may be decreased in a process of mixing, foaming, compression-molding, and the like, and durability may be decreased, that is, a molded product may be broken and the like.

Examples of mixing the polystyrene foamed particle and the flame retardant particle are not particularly limited, but may include various mixing methods that are widely used in an art related to mixing of a resin composition.

The heat-treatment of the mixture may be performed at 80°C to 250 °C or 100 °C to 120 °C. In addition, the heat-treatment may be performed under a pressure of 1 kg/cm$^2$ to 50 kg/cm$^2$, 5 kg/cm$^2$ to 20 kg/cm$^2$, or 6 kg/cm$^2$ to 7 kg/cm$^2$. Furthermore, the heat treatment may be performed for 20 seconds to 200 seconds.

Accordingly, the foamed mixture may be compression-molded, and specifically, the mixture of the polystyrene foamed particle and the flame retardant particle is additionally foamed along with compression to manufacture a Styrofoam having a predetermined shape. A method of the compression molding is not particularly limited, but may include, for example, putting the foamed mixture in a molder having a predetermined shape and compressing it while heat-treating it.

The heat-treatment of the mixture may also be performed at 80°C to 250 °C or 100°C to 120 °C under a dry or wet condition, but preferably, under the wet condition. Examples of the wet condition may include contacting a vapor, and specifically a vapor at 80°C to 250 °C under a pressure of 1 kg/cm$^2$ to 50 kg/cm$^2$, with the mixture. Examples of the vapor are not particularly limited, but various materials that are widely used in a wet process may be used without a particular limit.

After the compression-molding under the wet condition, drying for 40 hours to 80 hours may be further included.

On the other hand, according to a second embodiment of manufacturing the flame retardant Styrofoam, a method of manufacturing a flame retardant Styrofoam is provided, which includes foaming by heat-treating a mixture of a foamable polystyrene resin and a flame retardant particle according to the embodiment.

The aforementioned flame retardant Styrofoam manufacturing method may allow reduction of a size of a mixing device and minimize an amount of the flame retardant particles, and may use conventional manufacture equipment by mixing a minute-sized polystyrene resin with the flame retardant particle before foaming the polystyrene resin, which is confirmed through an experiment to complete the present invention.

In addition, after mixing the minute-sized polystyrene resin with the flame retardant particle before the foaming, the flame retardant particle strongly bonded on the surface of the polystyrene foam maintains durability even after foaming and compression-molding, and accordingly, moisture resistance and flame retardancy of a finally manufactured flame retardant Styrofoam may be improved.

The flame retardant particle may have the same specifications as illustrated in the embodiment.

Specifically, the foamable polystyrene resin is a polystyrene resin before foaming, and includes a polystyrene resin and a forming agent impregnated therein and is foamed in the following foaming step.

The foamable polystyrene resin may include 2 to 10 parts by weight of the forming agent based on 100 parts by weight of the polystyrene resin, and examples of the forming agent are not particularly limited, but may include, for example, propane, butane, hexane, pentane, heptane, cyclobutane, cyclohexane, methyl chloride, ethyl chloride, methylene chloride, dimethyl ether, diethyl ether, methylethyl ether, nitrogen, carbon dioxide, argon, or a mixture of two or more thereof. In addition, the foamable polystyrene resin may further include a flame retardant and the like as an additive.

The foamable polystyrene resin may have a spherical polystyrene particle shape having a particle diameter of 0.5 mm to 1.5 mm. The spherical polystyrene particle having a particle diameter of 0.5 mm to 1.5 mm has a small particle diameter and thus may minimize a mixing amount of the flame retardant particle for bonding on the surface of the polystyrene particle and reduce a size of a mixing device.

The foamable spherical polystyrene particle manufacturing method is not particularly limited, but may, for example, include a suspension polymerization method, a compounding method, or the like. Examples of the suspension polymerization method may include: a suspension polymerization method of a styrene monomer in an aqueous reaction medium or a suspension polymerization method including suspension polymerization of a styrene monomer with at least one comonomer; and adding a forming agent thereto before the suspension polymerization, during the suspension polymerization, or after the suspension polymerization.

Examples of the compounding method may include: producing a styrene-based polymer particle by extruding and cutting a styrene-based polymer after compounding the styrene-based polymer; and adding a forming agent to the styrene-based polymer particle.

The foamable polystyrene resin may have density ranging from 14 g/l to 20 g/l.

A mixture of the foamable polystyrene resin and the flame retardant particle may include 0.0005 parts by weight to 0.5 parts by weight of the flame retardant particle based on 1 part by weight of the foamable polystyrene resin. When an amount of the flame retardant particles is excessively reduced to 0.0005 parts by weight based on 1 part by weight of the foamable polystyrene resin, a flame retardancy-improving effect may not be sufficiently realized due to the reduction of the amount of flame retardant particles.

On the other hand, when the amount of the foamable polystyrene resin is excessively increased to greater than 0.5 parts by weight based on 1 part by weight of the flame retardant particles, the foamable polystyrene resin may be difficult to mix with the flame retardant particles, formability in a process of mixing, foaming, compression-molding, and the like may decrease, and durability may be deteriorated, for example, a molded product may be broken and the like.

Mixing examples of the foamable polystyrene resin and the flame retardant particle are not particularly limited, but may include various mixing methods that are widely used in an art related to mixing of a resin composition.

On the other hand, the heat-treatment may be performed at 50°C to 200 °C or 100°C to 110 °C. Specifically, the heat treatment may be performed for 20 seconds to 200 seconds. In the foaming, the foamable polystyrene resin included in the mixture is foamed, and may produce a polystyrene foam having an expanded volume compared with that of the foamable polystyrene resin.

In the mixture before the foaming, the flame retardant particle may be bonded on the surface of the foamable polystyrene resin, and after the foaming, the bond may be maintained on the surface of the produced polystyrene foam.

The foaming may be performed under a pressure of 0.05 $kg/cm^2$ to 1 $kg/cm^2$, 0.1 $kg/cm^2$ to 0.5 $kg/cm^2$, or 0.1 $kg/cm^2$ to 0.4 $kg/cm^2$.

The foaming through heat treatment of the mixture at 50°C to 200 °C or 100°C to 110 °C may be performed under a dry or wet condition, and preferably under the wet condition. Examples of the wet condition may include contacting a vapor, and specifically a vapor at 50°C to 200 °C under a pressure of 0.05 $kg/cm^2$ to 1 $kg/cm^2$, with the mixture. Examples of the vapor are not particularly limited, but various materials that are widely used in a wet process may be used without a particular limit.

In this way, after the foaming under the wet condition, the foam-treated mixture may be further dried for 1 hour to 2 hours.

In addition, after the foaming, the foamed mixture may be further heat-treated at 80°C to 250 °C or 100°C to 120 °C. Specifically, the heat treatment may be performed for 20 seconds to 200 seconds. The additional heat-treatment may be performed under a pressure of 1 $kg/cm^2$ to 50 $kg/cm^2$, 5 $kg/cm^2$ to 20 $kg/cm^2$, or 6 $kg/cm^2$ to 7 $kg/cm^2$.

Accordingly, the foamed mixture may be compression-molded, and specifically, molded along with compression to have a predetermined shape as the mixture of the polystyrene foamed particle and the flame retardant particle is additionally foamed. Examples of the compression molding are not particularly limited, but may, for example, include a method of compressing the foamed mixture while heat-treating it after putting it in a molder having a predetermined shape.

The heat treatment of the mixture may be performed at 80°C to 250 °C or 100 °C to 120 °C under a dry or wet condition, but preferably, under the wet condition. Examples of the wet condition may include contacting a vapor, and specifically a vapor at 80°C to 250 °C under a pressure of 1 $kg/cm^2$ to 50 $kg/cm^2$, with the mixture. Examples of the vapor are not particularly limited, but various materials that are widely used in a wet process may be used without a particular limit.

In this way, drying for 40 hours to 80 hours after the compression-molding under the wet condition may be further included.

**[Advantageous Effects]**

According to the present invention, a flame retardant particle having excellent flame retardancy or moisture

resistance and a manufacturing method therefor, and a flame retardant Styrofoam using the same, are provided.

**[Description of the Drawings]**

FIG. 1 is a surface SEM image showing flame retardant particles according to Example 1.
FIG. 2 is a camera-taken image showing the flame retardant particles according to Example 1.
FIG. 3 is a camera-taken image showing Styrofoam of Example 10 before foaming.
FIG. 4 is a camera-taken image showing Styrofoam of Example 10 after foaming.
FIG. 5 is a camera-taken image showing Styrofoam of Example 10 after molding.
FIG. 6 shows a $^{29}Si$ NMR spectrum of the flame retardant particles according to Example 1.
FIG. 7 is a surface SEM image showing flame retardant particles according to Example 2.
FIG. 8 shows a $^{29}Si$ NMR spectrum of the flame retardant particles according to Example 2.
FIG. 9 shows a $^{29}Si$ NMR spectrum of waterglass as a reference example.
FIG. 10 shows a $^{29}Si$ NMR spectrum of cenosphere as a reference example.
FIG. 11 is a surface SEM image showing flame retardant particles according to Example 5.
FIG. 12 is a surface SEM image showing flame retardant particles according to Example 6.
FIG. 13 is a surface SEM image showing flame retardant particles according to Example 7.
FIG. 14 is a surface SEM image showing flame retardant particles according to Example 8.

**[Mode for Invention]**

Hereinafter, the present invention is described in detail with reference to examples. However, the following examples are only illustrative of the present invention, and do not limit the disclosure of the present invention in any way.

**<Example 1 to 9: Manufacture of Flame Retardant Particle>**

**Example 1**

100 g of cenospheres (silicon dioxide ($SiO_2$): about 60 wt%, aluminum oxide ($Al_2O_3$): about 30 wt%, iron oxide ($Fe_2O_3$): about 4 wt%, calcium oxide (CaO): about 4 wt%, and magnesium oxide particles (200 mesh) (MgO): about 2 wt%), 400 g of waterglass (KS standard 2: $Na_2SiO_2 \cdot nH_2O$), and 20 g of polydimethylsiloxane having viscosity of 100 cps at 20 °C (Element 14 PDMS 100 made by Momentive Chemicals Co.; weight average molecular weight: 6000 g/mol) were mixed, and the mixture was put in an approximately 100 °C hot-air agitator and then hot-air dried and gelated for about 1.5 hour, while being stirred at a speed of about 150 rpm. The gelated mixture was pulverized with a grinder to obtain the flame retardant particle.

**Example 2**

100 g of cenospheres (silicon dioxide ($SiO_2$): about 60 wt%, aluminum oxide ($Al_2O_3$): about 30 wt%, iron oxide ($Fe_2O_3$): about 4 wt%, calcium oxide (CaO): about 4 wt%, and magnesium oxide particles (200 mesh) (MgO): about 2 wt%), and 400 g of waterglass (KS standard 2: $Na_2SiO_2 \cdot nH_2O$) were mixed, and the mixture was put in an approximately 100 °C hot-air agitator and then hot-air dried and gelated while being stirred at a speed of about 150 rpm. The gelated mixture was pulverized with a grinder to prepare the flame retardant particle.

**Example 3**

100 g of cenospheres (silicon dioxide ($SiO_2$): about 60 wt%, aluminum oxide ($Al_2O_3$): about 30 wt%, iron oxide ($Fe_2O_3$): about 4 wt%, calcium oxide (CaO): about 4 wt%, and magnesium oxide particles (200 mesh) (MgO): about 2 wt%), 400 g of waterglass (KS standard 2: $Na_2SiO_2 \cdot nH_2O$), 4 g of titanium dioxide, 8 g of an aluminum sulfate aqueous solution (aluminum sulfate: 3 g), 6 g of a calcium phosphate aqueous solution (calcium phosphate: 2 g), 2 g of carbon black, and 20 g of polydimethylsiloxane having viscosity of 100 cps at 20 °C (Element 14 PDMS 100, Momentive Chemicals Co.; a weight average molecular weight: 6000 g/mol) were mixed, and the mixture was put in an approximately 100 °C hot-air agitator and then hot-air dried and gelated while being stirred at a speed of about 150 rpm. The gelated mixture was pulverized with a grinder to prepare the flame retardant particle.

**Example 4**

100 g of cenospheres (silicon dioxide ($SiO_2$): about 60 wt%, aluminum oxide ($Al_2O_3$): about 30 wt%, iron oxide ($Fe_2O_3$): about 4 wt%, calcium oxide (CaO): about 4 wt%, and magnesium oxide particles (200 mesh) (MgO): about 2 wt%), 400 g of waterglass (KS standard 2: $Na_2SiO_2 \bullet nH_2O$), 4 g of titanium dioxide, 8 g of an aluminum sulfate aqueous solution (3 g of aluminum sulfate), 6 g of a calcium phosphate aqueous solution (2 g of calcium phosphate), and 2 g of carbon black were mixed, and the mixture was put in an approximately 100 °C hot-air agitator and then hot-air dried and gelated while being stirred at a speed of about 150 rpm. The gelated mixture was pulverized with a grinder to prepare the flame retardant particle.

**Example 5**

The flame retardant particle was prepared according to the same method as Example 3, except for using a ceramic microsphere particle instead of the cenosphere particle.

**Example 6**

The flame retardant particle was prepared according to the same method as Example 3, except for using an unburned carbon particle instead of the cenosphere particle.

**Example 7**

The flame retardant particle was prepared according to the same method as Example 3, except for using a cleaned ash particle instead of the cenosphere particle.

**Example 8**

The flame retardant particle was prepared according to the same method as Example 3, except for using a fly ash particle instead of the cenosphere particle.

**Example 9**

The flame retardant particle was prepared according to the same method as Example 3, except for using cenosphere (silicon dioxide ($SiO_2$): about 60 wt%, aluminum oxide ($Al_2O_3$): about 30 wt%, iron oxide ($Fe_2O_3$): about 4 wt%, calcium oxide (CaO): about 4 wt%, and magnesium oxide particles (200 mesh) (MgO): about 2 wt%), and heat-treated at 800 °C for 10 minutes.

**<Examples 10 to 21: Manufacture of Flame Retardant Styrofoam>**

**Example 10**

70 g of polystyrene beads (SB 2,000 made by SH Energy & Chemical Co., Ltd.; particle diameter 1.1 mm) including 94 wt% of polystyrene resin and 6 wt% of pentane was mixed with 15 g of a polyvinyl acetate resin in an agitator to form a polyvinyl acetate resin coating layer on the bead surface, 80 g of the flame retardant particles according to Example 1 was added thereto in the agitator, and the mixture was mixed and dried.

Subsequently, 20 g of an acrylic resin was added to the agitator to form an acrylic resin coating layer on the surface, 40 g of the flame retardant particle according to Example 1 was added thereto, and the obtained mixture was mixed and dried.

Then, the dried mixture was put in a steam agitator and then primarily foamed through heat-treatment for 80 seconds with vapor at 105 °C under a pressure of 0.2 $kg/cm^2$ and dried in the air for one hour. The primarily-foamed and dried Styrofoam was put in a steam-molder and then secondarily compression-foamed through heat treatment with vapor at 120 °C under a pressure of 6.5 $kg/cm^2$ for 80 seconds, and then dried for about 2 days to manufacture a flame retardant Styrofoam.

**Example 11**

70 g of polystyrene beads (SB 2,000 made by SH Energy & Chemical Co., Ltd.: particle diameter 1.1 mm) including 94 wt% of a polystyrene resin and 6 wt% of pentane was mixed with 15 g of a polyvinyl acetate resin in an

agitator to form a polyvinyl acetate resin coating layer on the bead surface, 80 g of the flame retardant particles according to Example 1 was added to the agitator, and the mixture was mixed and dried.

Subsequently, 20 g of an acrylic resin was added to the agitator to form an acrylic resin coating layer on the surface, 40 g of the flame retardant particles according to Example 1 was added thereto, and the obtained mixture was mixed and dried. Subsequently, 5 g of polydimethylsiloxane (Element 14 PDMS 100, Momentive Chemicals Co.; weight average molecular weight: 6000 g/mol) having viscosity of 100 cps at 20 °C was additionally added thereto, and the obtained mixture was dried.

The dried mixture was put in a steam agitator and primarily foamed through heat treatment with vapor at 105 °C temperature under a pressure of 0.2 kg/cm$^2$ for 80 seconds and dried in the air for 1 hour. The primarily-foamed and dried Styrofoam was put in a steam molder and then secondarily compression-foamed with vapor at 120 °C under a pressure of 6.5 kg/cm$^2$ for 80 seconds, and then dried for about 2 days to manufacture a flame retardant Styrofoam.

**Example 12**

70 g of polystyrene beads (SB 2,000 made by SH Energy & Chemicals Co., Ltd.; particle diameter: 1.1 mm) including 94 wt% of polystyrene resin and 6 wt% of pentane was mixed with 20 g of an acrylic resin to form an acrylic resin coating layer on the bead surface, 40 g of the flame retardant particles according to Example1 was added to the agitator, and the mixture was mixed and dried.

Subsequently, 15 g of a polyvinyl acetate resin was added to the agitator to form a polyvinyl acetate resin coating layer on the surface, 80 g of the flame retardant particles according to Example 1 was added thereto, and the mixture was mixed and dried.

The dried mixture was put in a steam agitator and then primarily foamed through heat treatment with vapor at 105 °C under a pressure of 0.2 kg/cm$^2$ for 80 seconds and dried in the air for 1 hour. The primarily foamed and dried Styrofoam was put in a steam molder and then secondarily compression-foamed through heat treatment with vapor at 120 °C under a pressure of 6.5 kg/cm$^2$ for 80 seconds, and dried for about 2 days to manufacture a flame retardant Styrofoam.

**Example 13**

70 g of polystyrene beads (SB 2,000 made by SH Energy & Chemicals Co., Ltd.; particle diameter: 1.1 mm) including 94 wt% of polystyrene resin and 6 wt% of pentane was mixed with 20 g of an acrylic resin in an agitator to form an acrylic resin coating layer on the bead surface, 40 g of the flame retardant particle according to Example 1 was added to the agitator, and the mixture was mixed and dried.

Subsequently, 15 g of a polyvinyl acetate resin was added to the agitator to form a polyvinyl acetate resin coating layer on the surface, 80 g of the flame retardant particles according to Example 1 was added thereto, and the obtained mixture was mixed and dried. Then, 5 g of polydimethylsiloxane having viscosity of 100 cps (Element 14 PDMS 100, Momentive Chemicals Co.; weight average molecular weight: 6000 g/mol) was added thereto at 20 °C, and the obtained mixture was dried.

Then, the dried mixture was put in a steam agitator and then primarily foamed through heat treatment with vapor at 105 °C under a pressure of 0.2 kg/cm$^2$ for 80 seconds, and dried in the air for 1 hour. The primarily foamed and dried Styrofoam was put in a steam molder and then secondarily compression-foamed through heat treatment with vapor at 120 °C under a pressure of 6.5 kg/cm$^2$ for 80 seconds, and dried for about 2 days to manufacture a flame retardant Styrofoam.

**Example 14**

70 g of polystyrene beads (SB 2,000 made by SH Energy and Chemicals Co., Ltd.; particle diameter: 1.1 mm) including 94 wt% of polystyrene resin and 6 wt% of pentane was mixed with 25 g of a starch-based acrylic resin in an agitator for about 1 minute to form a starch-based acrylic resin coating layer on the bead surface, 60 g of the flame retardant particles according to Example 1 was added thereto, and the mixture was mixed for about 1 minute and dried.

Subsequently, 15 g of a phenol resin was added to the agitator and mixed for one minute to form a phenol resin coating layer on the surface, 40 g of the flame retardant particles according to Example 1 was added thereto, and the obtained mixture was mixed for 1 minute and dried with hot air of room temperature in an oven for about 1 hour.

The dried mixture was put in a steam agitator and then primarily foamed through heat treatment with vapor at 105 °C under a pressure of 0.2 kg/cm$^2$ for 80 seconds, and dried in the air for 1 hour. The primarily foamed and dried Styrofoam was put in a steam molder and then secondarily compression-foamed through heat treatment with vapor at 120 °C under a pressure of 6.5 kg/cm$^2$ for 80 seconds, and dried for about 2 days.

### Example 15

70 g of polystyrene beads (SB 2,000 made by SH Energy and Chemicals Co., Ltd.; particle diameter: 1.1 mm) including 94 wt% of polystyrene resin and 6 wt% of pentane was mixed with 25 g of a phenol resin in an agitator for about 1 minute to form a phenol resin coating layer on the bead surface, 60 g of the flame retardant particles according to Example 1 was added thereto, and the mixture was mixed for about 1 minute and dried.

Subsequently, 25 g of a starch-based acrylic resin was added to the agitator and mixed for one minute to form a starch-based acrylic resin coating layer on the surface, 40 g of the flame retardant particles according to Example 1 was added thereto, and the obtained mixture was mixed for 1 minute and dried with hot air of room temperature in an oven for about 1 hour.

The dried mixture was put in a steam agitator and then primarily foamed through heat treatment with vapor at 105 °C under a pressure of 0.2 $kg/cm^2$ for 80 seconds, and dried in the air for 1 hour. The primarily foamed and dried Styrofoam was put in a steam molder and then secondarily compression-foamed through heat treatment with vapor at 120 °C under a pressure of 6.5 $kg/cm^2$ for 80 seconds, and dried for about 2 days to form a flame retardant Styrofoam.

### Example 16

70 g of polystyrene beads (SB 2,000 made by SH Energy and Chemicals Co., Ltd.; particle diameter: 1.1 mm) including 94 wt% of polystyrene resin and 6 wt% of pentane was mixed with 15 g of a polyvinyl acetate resin in an agitator for about 1 minute to form a polyvinyl acetate resin coating layer on the bead surface, 80 g of the flame retardant particles according to Example 2 was added thereto, and the mixture was mixed for about 1 minute and dried.

Subsequently, 20 g of an acrylic resin was added to the agitator and mixed to form an acrylic resin coating layer on the surface, 40 g of the flame retardant particles according to Example 1 was added thereto, and the obtained mixture was mixed and dried.

The dried mixture was put in a steam agitator and then primarily foamed through heat treatment with vapor at 105 °C under a pressure of 0.2 $kg/cm^2$ for 80 seconds, and dried in the air for 1 hour. The primarily foamed and dried Styrofoam was put in a steam molder and then secondarily compression-foamed through heat treatment with vapor at 120 °C under a pressure of 6.5 $kg/cm^2$ for 80 seconds, and dried for about 2 days to manufacture a flame retardant Styrofoam.

### Example 17

70 g of polystyrene beads (SB 2,000 made by SH Energy and Chemicals Co., Ltd.; particle diameter: 1.1 mm) including 94 wt% of polystyrene resin and 6 wt% of pentane was mixed with 20 g of an acrylic resin in an agitator for about 1 minute to form an acrylic resin coating layer on the bead surface, 40 g of the flame retardant particles according to Example 2 was added thereto, and the mixture was mixed for about 1 minute and dried.

Subsequently, 15 g of a polyvinyl acetate resin was added to the agitator to form a polyvinyl acetate resin coating layer on the surface, 80 g of the flame retardant particles according to Example 2 was added thereto, and the obtained mixture was mixed and dried.

The dried mixture was put in a steam agitator and then primarily foamed through heat treatment with vapor at 105 °C under a pressure of 0.2 $kg/cm^2$ for 80 seconds, and dried in the air for 1 hour. The primarily foamed and dried Styrofoam was put in a steam molder and then secondarily compression-foamed through heat treatment with vapor at 120 °C under a pressure of 6.5 $kg/cm^2$ for 80 seconds, and dried for about 2 days to manufacture a flame retardant Styrofoam.

### Example 18

70 g of polystyrene beads (SB 2,000 made by SH Energy and Chemicals Co., Ltd.; particle diameter: 1.1 mm) including 94 wt% of polystyrene resin and 6 wt% of pentane was mixed with 25 g of a starch-based acrylic resin in an agitator for about 1 minute to form a starch-based acrylic resin coating layer on the bead surface, 60 g of the flame retardant particles according to Example 2 was added thereto, and the mixture was mixed for about 1 minute and dried.

Subsequently, 15 g of a phenol resin was added to the agitator and mixed for one minute to form a phenol resin coating layer on the surface, 40 g of the flame retardant particles according to Example 2 was added thereto, and the obtained mixture was mixed for 1 minute and dried with hot air of room temperature in an oven for about 1 hour.

The dried mixture was put in a steam agitator and then primarily foamed through heat treatment with vapor at 105 °C under a pressure of 0.2 $kg/cm^2$ for 80 seconds, and dried in the air for 1 hour. The primarily foamed and dried Styrofoam was put in a steam molder and then secondarily compression-foamed through heat treatment with vapor at 120 °C under a pressure of 6.5 $kg/cm^2$ for 80 seconds, and dried for about 2 days to manufacture a flame retardant

Styrofoam.

**Example 19**

70 g of polystyrene beads (SB 2,000 made by SH Energy and Chemicals Co., Ltd.; particle diameter: 1.1 mm) including 94 wt% of polystyrene resin and 6 wt% of pentane was mixed with 25 g of a phenol resin in an agitator for about 1 minute to form a phenol resin coating layer on the bead surface, 60 g of the flame retardant particles according to Example 2 was added thereto, and the mixture was mixed for about 1 minute and dried.

Subsequently, 25 g of a starch-based acrylic resin was added to the agitator and mixed for one minute to form a starch-based acrylic resin coating layer on the surface, 40 g of the flame retardant particles according to Example 2 was added thereto, and the obtained mixture was mixed for 1 minute and dried with hot air of room temperature in an oven for about 1 hour.

The dried mixture was put in a steam agitator and then primarily foamed through heat treatment with vapor at 105 °C under a pressure of 0.2 $kg/cm^2$ for 80 seconds, and dried in the air for 1 hour. The primarily foamed and dried Styrofoam was put in a steam molder and then secondarily compression-foamed through heat treatment with vapor at 120 °C under a pressure of 6.5 $kg/cm^2$ for 80 seconds, and dried for about 2 days to manufacture a flame retardant Styrofoam.

**Example 20**

70 g of polystyrene beads (SB 2,000 made by SH Energy and Chemicals Co., Ltd.; particle diameter: 1.1 mm) including 94 wt% of polystyrene resin and 6 wt% of pentane was mixed with 15 g of a polyvinyl acetate resin in an agitator for about 1 minute to form a polyvinyl acetate resin coating layer on the bead surface, 50 g of the flame retardant particles according to Example 3 was added thereto, and the mixture was mixed and dried.

Subsequently, 20 g of an acrylic resin was added to the agitator to form an acrylic resin coating layer on the surface, 30 g of the flame retardant particles according to Example 3 was added thereto, and the obtained mixture was mixed and dried.

The dried mixture was put in a steam agitator and then primarily foamed through heat treatment with vapor at 105 °C under a pressure of 0.2 $kg/cm^2$ for 80 seconds, and dried in the air for 1 hour. The primarily foamed and dried Styrofoam was put in a steam molder and then secondarily compression-foamed through heat treatment with vapor at 120 °C under a pressure of 6.5 $kg/cm^2$ for 80 seconds, and dried for about 2 days to manufacture a flame retardant Styrofoam.

**Example 21**

70 g of polystyrene beads (SB 2,000 made by SH Energy and Chemicals Co., Ltd.; particle diameter: 1.1 mm) including 94 wt% of polystyrene resin and 6 wt% of pentane was mixed with 15 g of a polyvinyl acetate resin in an agitator for about 1 minute to form a polyvinyl acetate resin coating layer on the bead surface, 50 g of the flame retardant particles according to Example 4 was added thereto, and the mixture was mixed and dried.

Subsequently, 20 g of an acrylic resin was added to the agitator and mixed for one minute to form an acrylic resin coating layer on the surface, 30 g of the flame retardant particles according to Example 4 was added thereto, and the obtained mixture was mixed and dried.

The dried mixture was put in a steam agitator and then primarily foamed through heat treatment with vapor at 105 °C under a pressure of 0.2 $kg/cm^2$ for 80 seconds, and dried in the air for 1 hour. The primarily foamed and dried Styrofoam was put in a steam molder and then secondarily compression-foamed through heat treatment with vapor at 120 °C under a pressure of 6.5 $kg/cm^2$ for 80 seconds, and dried for about 2 days to manufacture a flame retardant Styrofoam.

**<Comparative Examples 1 to 2: Manufacture of Flame Retardant Styrofoam>**

**Comparative Example 1**

(1) Preparation of Flame Retardant Composition

100 g of cenospheres (silicon dioxide ($SiO_2$): about 60 wt%, aluminum oxide ($Al_2O_3$): about 30 wt%, iron oxide ($Fe_2O_3$): about 4 wt%, calcium oxide (CaO): about 4 wt%, 100 g of magnesium oxide particles (200 mesh) (MgO): about 2 wt%), 400 g of waterglass (KS standard 2: $Na_2SiO_2 \cdot nH_2O$), 4 g of titanium dioxide, 8 g of an aluminum sulfate aqueous solution (3 g of aluminum sulfate), 6 g of a calcium phosphate aqueous solution (2 g of calcium phosphate), 2 g of carbon

black, and 20 g of polydimethylsiloxane having viscosity of 100 cps at 20 °C (Element 14 PDMS 100, Momentive Chemicals Co.; a weight average molecular weight: 6000 g/mol) were mixed to prepare a flame retardant composition.

(2) Manufacture of Flame Retardant Styrofoam

A flame retardant Styrofoam was manufactured according to the same method as Example 10, except for using the flame retardant composition instead of the flame retardant particle according to the example.

**Comparative Example 2**

(1) Preparation of Flame Retardant Composition

A flame retardant composition was prepared according to the same method as Comparative Example 1.

(2) Manufacture of Flame Retardant Styrofoam

A flame retardant Styrofoam was manufactured according to the same method as Example 16, except for using the flame retardant composition instead of the flame retardant particle according to the example.

**<Experimental Examples: Measurement of Properties of Flame Retardant Particle and Flame Retardant Styrofoam >**

Properties of the flame retardant particles and the flame retardant Styrofoam according to the examples and comparative examples were measured, and the results are shown in Table 1.

Experiment 1: Surface Characteristics

An FE-SEM image of the flame retardant particles according to Example 1 is shown in FIG. 1, and its camera-taken image is shown in FIG. 2.

In addition, a camera-taken image of the flame retardant Styrofoam before foaming according to Example 10 is shown in FIG. 3, a camera-taken image of the flame retardant Styrofoam after foaming according to Example 10 is shown in FIG. 4, and a camera-taken image of a final flame retardant Styrofoam after compression-molding is shown in FIG. 5.

As shown in FIG. 1, the flame retardant particle of Example 1 had a maximum diameter of about 50 μm and showed an irregular shape. In addition, as shown in FIG. 2, the flame retardant particle of Example 1 turned out to be a black powder.

As shown in FIG. 3, since the flame retardant particle was formed on the polystyrene bead surface, the surface appeared black.

In addition, as shown in FIGS. 4 and 5, the flame retardant Styrofoam of Example 10 showed that the flame retardant particle of Example 1 was formed on the surface.

An FE-SEM image of the flame retardant particle of Example 2 is shown in FIG. 7.

As shown in FIG. 7, the flame retardant particle of Example 2 had a maximum diameter of about 50 μm and showed an irregular shape.

In addition, as shown in FIGS. 11 to 14, the flame retardant particles according to Examples 5 to 8 showed a maximum diameter of about 50 μm and showed an irregular shape.

Experiment 2: Component Analysis

A $^{29}Si$ NMR spectrum of the flame retardant particle of Example 1 was measured by using Solid 400 MHz WB NMR Spectrometer (79.51 MHz, a solvent condition of $D_20$), and the results are shown in FIG. 6.

As shown in FIG. 6, the flame retardant particle of Example 1 showed a chemical shift at -92.27 ppm.

A $^{29}Si$ NMR spectrum of the flame retardant particle of Example 2 was measured by using Solid 400 MHz WB NMR Spectrometer (79.51 MHz, a solvent condition of $D_2O$), and the results are shown in FIG. 8.

As shown in FIG. 8, the flame retardant particle according to Example 2 showed a chemical shift at -92.27 ppm.

As a reference example, as shown in FIG. 9, waterglass showed a chemical shift at -80.41 ppm, -88.57 ppm, -90.57 ppm, -96.52 ppm, -97.41 ppm, and -106.53 ppm, and as shown in FIG. 10, cenospheres showed a chemical shift at -90.16 ppm and -108.9 ppm, which are different peaks from those of the flame retardant particles.

In other words, the flame retardant particles are not a simple mixture of the waterglass and the cenospheres,

but form a gelated polymer through heat-treating the mixture.

Experimental Example 3: Flame Retardancy

The flame retardant Styrofoam according to Examples 10 to 21 and Comparative Examples 1 and 2 were used to make specimens each having a size of a width of 10 cm * a length of 10 cm * a thickness of 5 cm, and the specimens were heated with a gas torch for 5 minutes to evaluate flame retardancy.
Specifically, when a specimen was neither set on fire nor smoked during 5 minutes of firing and greater than or equal to 70 % of Styrofoam particles remained, "excellent" was given, but when a specimen was set on fire and smoked during the 5 minutes of firing, and greater than or equal to 30 % of Styrofoam particles were combusted, "inferior" was given.

Experimental Example 4: Moisture Resistance

The flame retardant Styrofoam according to Examples 10 to 21 and Comparative Examples 1 to 2 were used to make specimens each having a size of a width of 10 cm * a length of 10 cm * a thickness of 5 cm, and the specimens were dipped in water to evaluate moisture resistance.
Specifically, when a specimen was dipped for 24 hours in 10 cm-deep water but not dissolved therein, "excellent" was given, but when a specimen was dipped for 24 hours in 10 cm-deep water but dissolved therein, "inferior" was given.

[Table 1]

| Experimental Example Results of Flame Retardant Styrofoam according to Examples and Comparative Examples | | |
|---|---|---|
| | Flame retardancy | Moisture resistance |
| Example 10 | excellent | excellent |
| Example 11 | excellent | excellent |
| Example 12 | excellent | excellent |
| Example 13 | excellent | excellent |
| Example 14 | excellent | excellent |
| Example 15 | excellent | excellent |
| Example 16 | excellent | excellent |
| Example 17 | excellent | excellent |
| Example 18 | excellent | excellent |
| Example 19 | excellent | excellent |
| Example 20 | excellent | excellent |
| Example 21 | excellent | excellent |
| Comparative Example 1 | inferior | inferior |
| Comparative Example 2 | inferior | inferior |

As shown in Table 1, Styrofoam manufactured by mixing the flame retardant particle according to Example 1 or 21 with a polystyrene bead showed excellent flame retardancy and moisture resistance.
On the other hand, Styrofoam formed by simply adding a retardant-material-including composition without using a flame retardant particle prepared through a gelation and pulverizing process as shown in the examples failed in sufficiently realizing flame retardancy and moisture resistance, since a retardant material was sufficiently adhered on Styrofoam.

## Claims

**1.** A flame retardant particle comprising a dry gel including at least one inorganic particle selected from cenospheres,

fly ash, ceramic microspheres, cleaned ash, and unburned carbon, wherein the flame retardant particle includes a peak having a chemical shift of -91 ppm to -95 ppm in a $^{29}Si$ NMR spectrum.

**2.** The flame retardant particle of claim 1, wherein the flame retardant particle has a maximum diameter of 0.01 μm to 1000 μm.

**3.** The flame retardant particle of claim 1, wherein the dry gel includes a cross-linked (co)polymer of at least two inorganic particles.

**4.** The flame retardant particle of claim 1, wherein the dry gel further includes 1 part by weight to 50 parts by weight of titanium oxide relative to 100 parts by weight of the inorganic particle.

**5.** The flame retardant particle of claim 1, wherein the dry gel further includes a siloxane-based polymer.

**6.** The flame retardant particle of claim 5, wherein the siloxane-based polymer has viscosity measured at 20 °C of 0.65 cps to 10000 cps.

**7.** The flame retardant particle of claim 5, wherein the siloxane-based polymer has a weight average molecular weight of 4000 g/mol to 10,000 g/mol.

**8.** A method of manufacturing a flame retardant particle, comprising:

heat-treating a flame retardant composition including at least one inorganic particle selected from cenospheres, fly ash, ceramic microspheres, cleaned ash, and unburned carbon, and an inorganic binder having viscosity at 20 °C of less than 100,000 cP, at a temperature of 60 °C to 200 °C; and
pulverizing the resulting material after the heat-treating.

**9.** The method of manufacturing a flame retardant particle of claim 8, wherein the flame retardant composition further includes 1 part by weight to 50 parts by weight of titanium oxide relative to 100 parts by weight of the inorganic particle.

**10.** The method of manufacturing a flame retardant particle of claim 8, wherein the heat-treating of the flame retardant composition is performed while stirring the flame retardant composition at a speed of 100 rpm to 200 rpm.

**11.** The method of manufacturing a flame retardant particle of claim 8, wherein the flame retardant composition further includes a siloxane-based polymer.

**12.** The method of manufacturing a flame retardant particle of claim 11, wherein the flame retardant composition includes 0.1 part by weight to 10 parts by weight of the siloxane-based polymer based on 100 parts by weight of the inorganic binder.

**13.** The method of manufacturing a flame retardant particle of claim 8, wherein the flame retardant composition includes 10 parts by weight to 100 parts by weight of the inorganic particle based on 100 parts by weight of the inorganic binder.

**14.** The method of manufacturing a flame retardant particle of claim 8, wherein the inorganic binder includes liquid sodium silicate.

**15.** The method of manufacturing a flame retardant particle of claim 14, wherein the liquid sodium silicate has a mole ratio of greater than or equal to 2.25 according to Equation 1:

[Equation 1]

$$\text{mole ratio} = \{SiO_2\ (wt\%)/Na_2O\ (wt\%)*1.032\}\ .$$

**16.** The method of manufacturing a flame retardant particle of claim 8, wherein the inorganic particle has a diameter of 100 mesh to 1000 mesh.

**17.** The method of manufacturing a flame retardant particle of claim 8, wherein the method further includes,

before heat-treating the flame retardant composition at a temperature of 60 °C to 200 °C,
heat-treating at least one inorganic particle selected from cenospheres, fly ash, ceramic microspheres, cleaned ash, and unburned carbon at a temperature of 500 °C to 1000 °C.

**18.** A flame retardant Styrofoam comprising:

a polystyrene foamed particle; and
a flame retardant layer formed on the polystyrene foamed particle and including the flame retardant particle of claim 1.

**19.** The flame retardant Styrofoam of claim 18, wherein 10 parts by weight to 500 parts by weight of the flame retardant particle is included based on 100 parts by weight of the polystyrene foamed particle.

**20.** The flame retardant Styrofoam of claim 18, wherein
an adhesive layer is further formed between the polystyrene foamed particle and the flame retardant layer.

FIG. 1

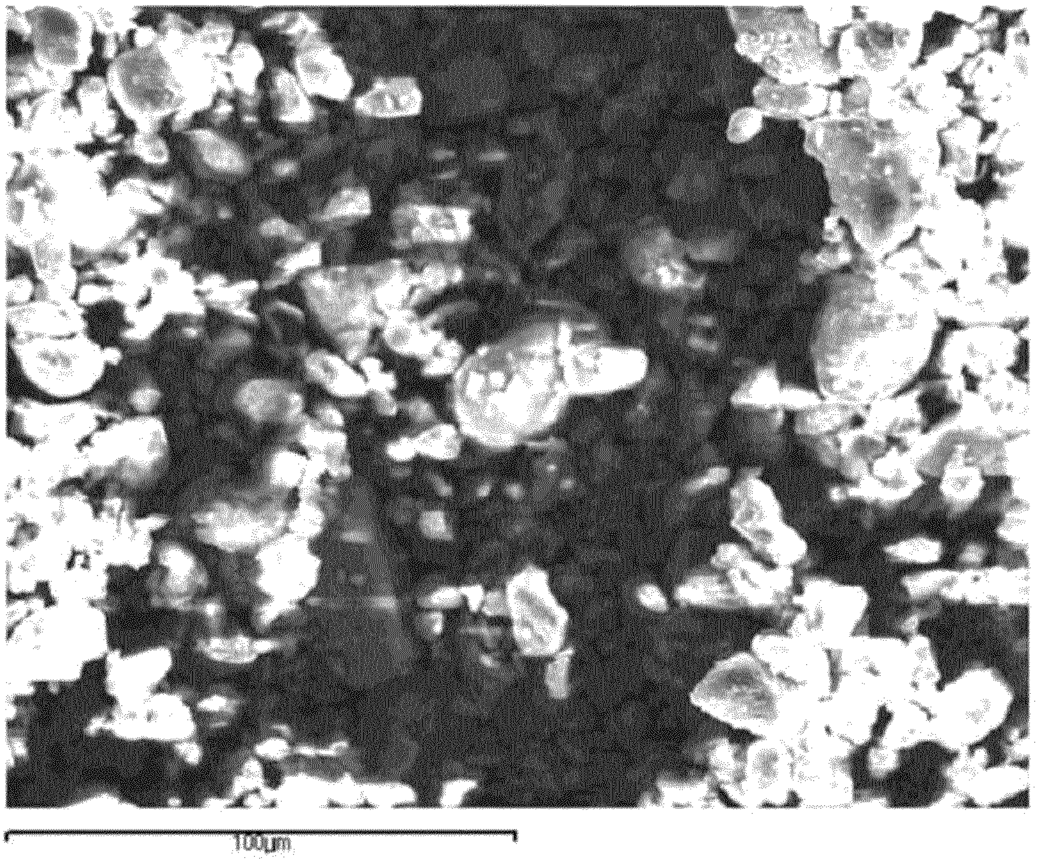

FIG. 2

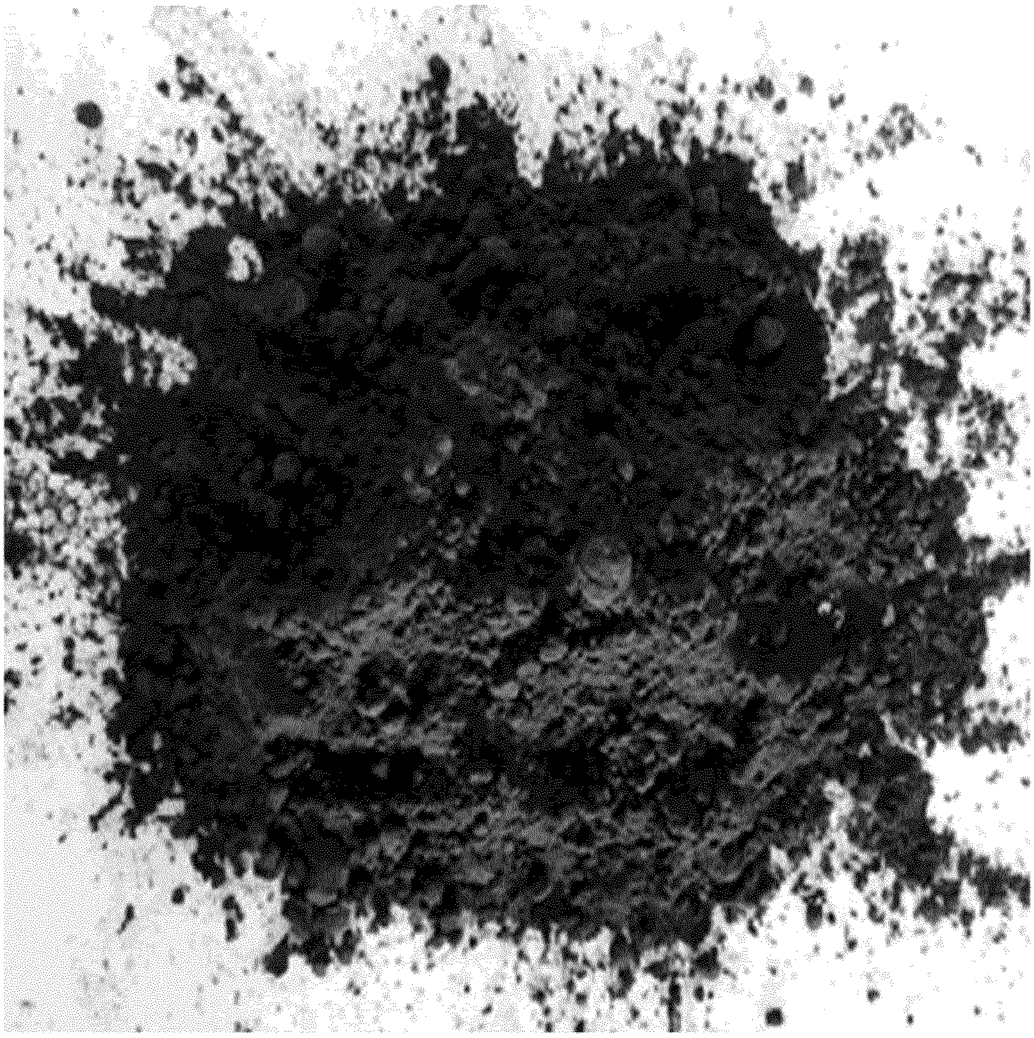

FIG. 3

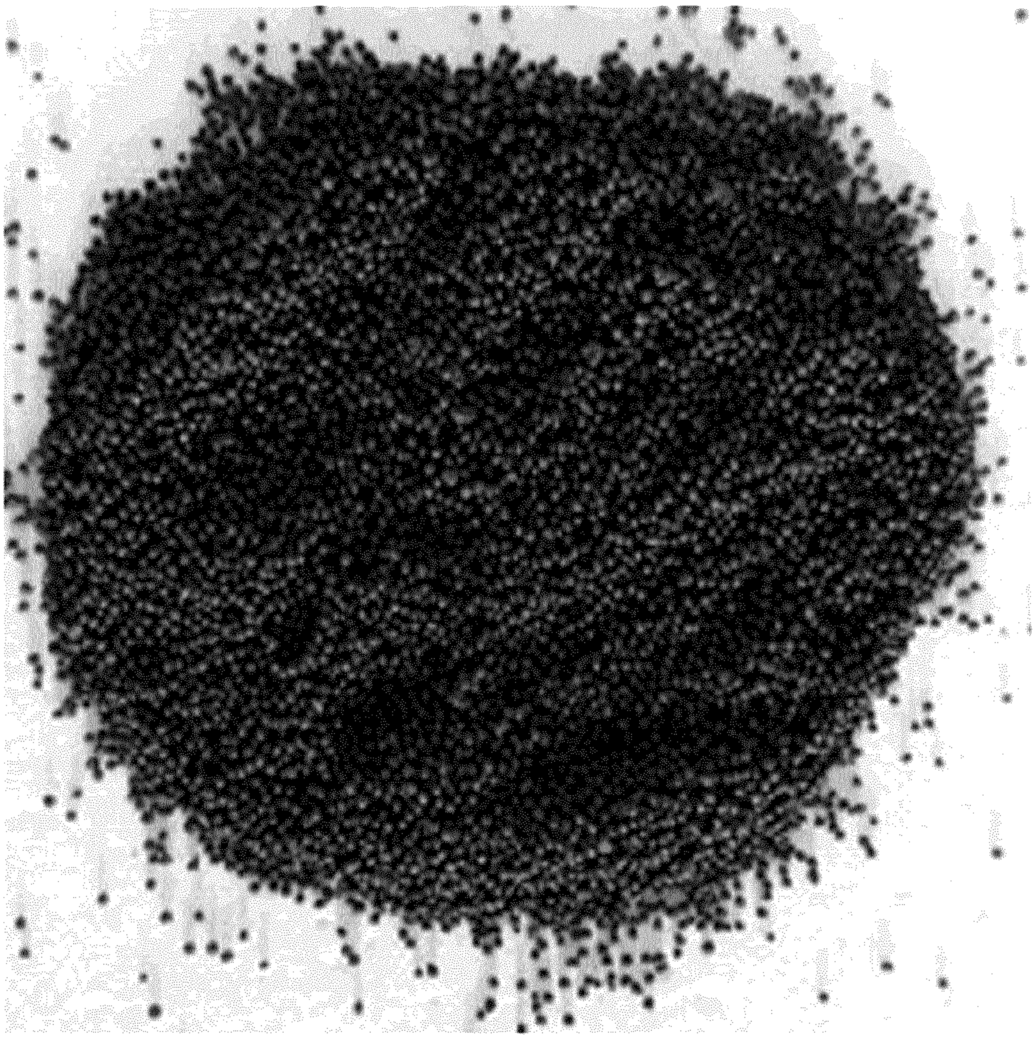

FIG. 4

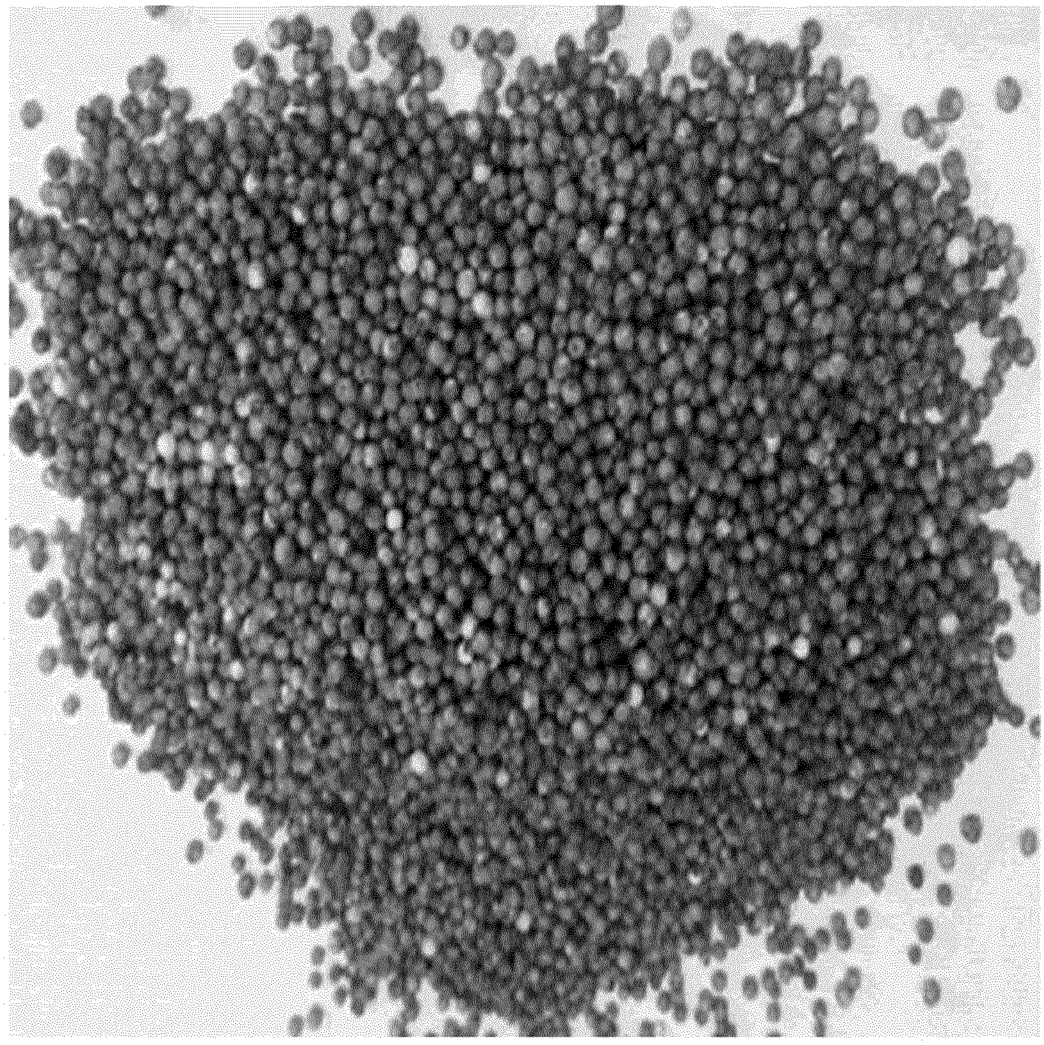

FIG. 5

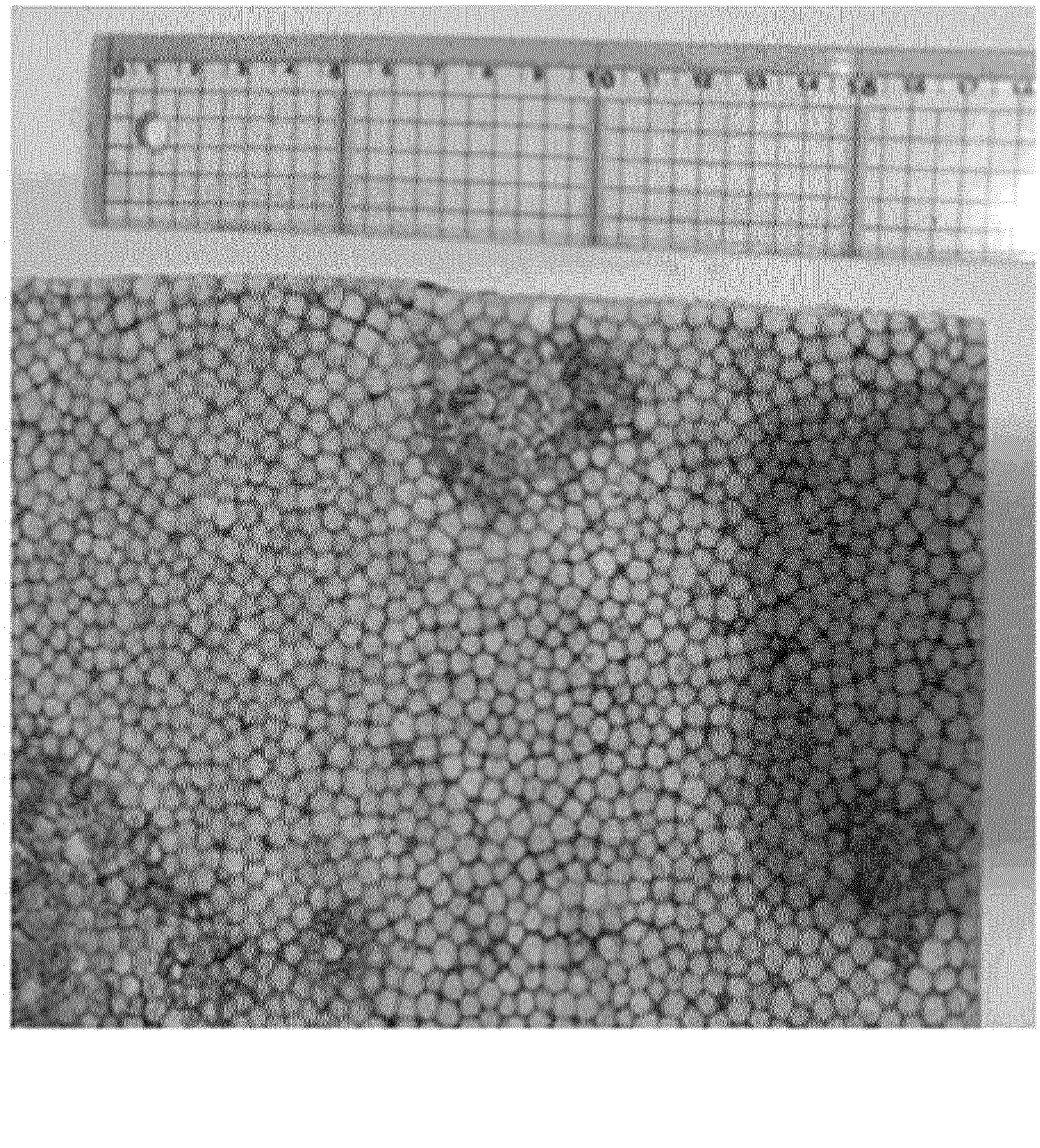

FIG. 6

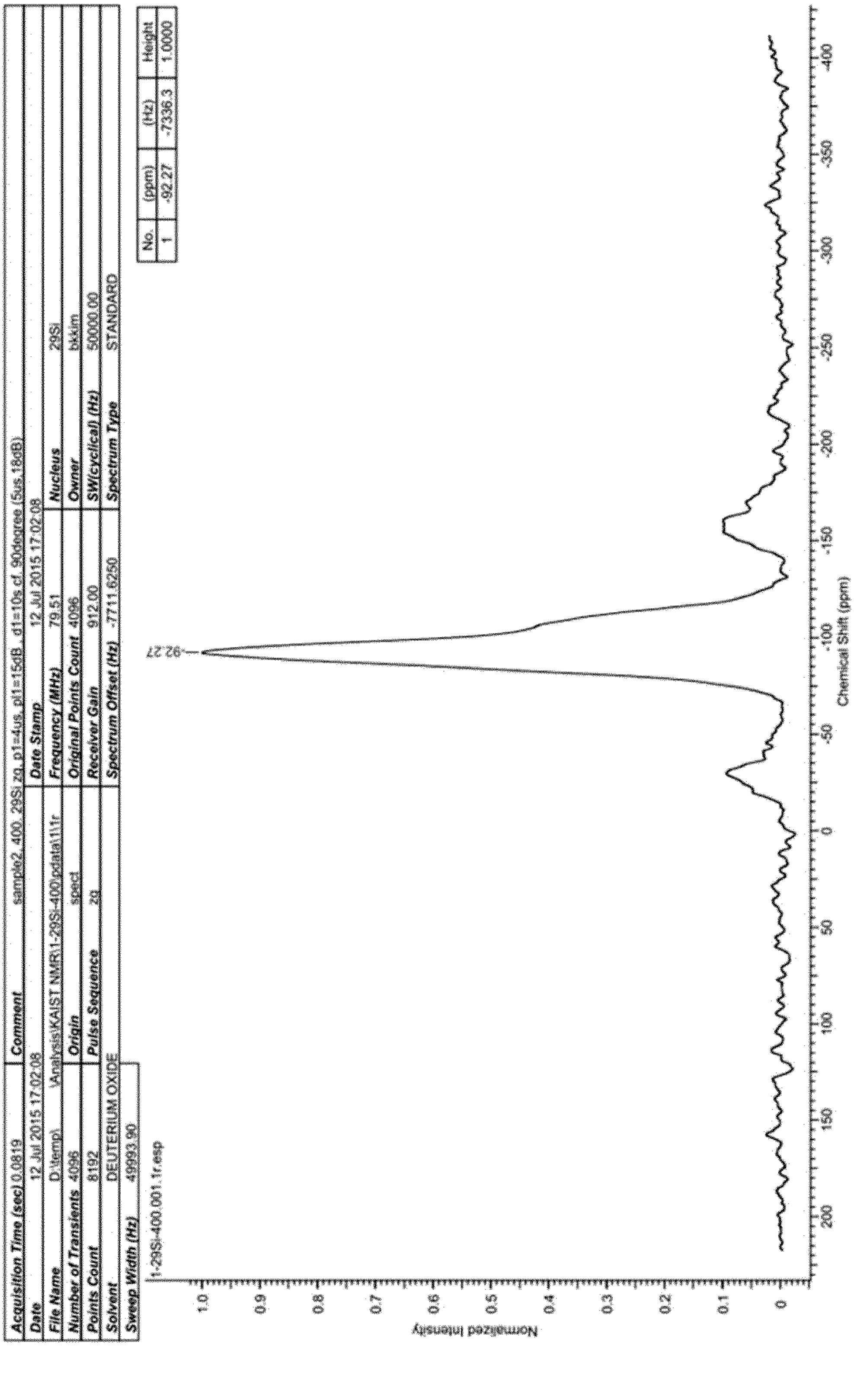
Acquisition Time (sec) 0.0819
Comment sample2_400_29Si zg, p1=4us, pl1=15dB, d1=10s cf. 90degree (5us,18dB)
Date 12 Jul 2015 17:02:08
Date Stamp 12 Jul 2015 17:02:08
File Name D:\temp\ \Analysis\KAIST NMR\1-29Si-400\pdata\1\1r
Frequency (MHz) 79.51
Nucleus 29Si
Number of Transients 4096
Origin spect
Original Points Count 4096
Owner bkkim
Points Count 8192
Pulse Sequence zg
Receiver Gain 912.00
SW(cyclical) (Hz) 50000.00
Solvent DEUTERIUM OXIDE
Spectrum Offset (Hz) -7711.6250
Spectrum Type STANDARD
Sweep Width (Hz) 49993.90
No. (ppm) (Hz) Height
1 -92.27 -7336.3 1.0000
1-29Si-400.001.1r.esp
-92.27
Normalized Intensity
Chemical Shift (ppm)

FIG. 7

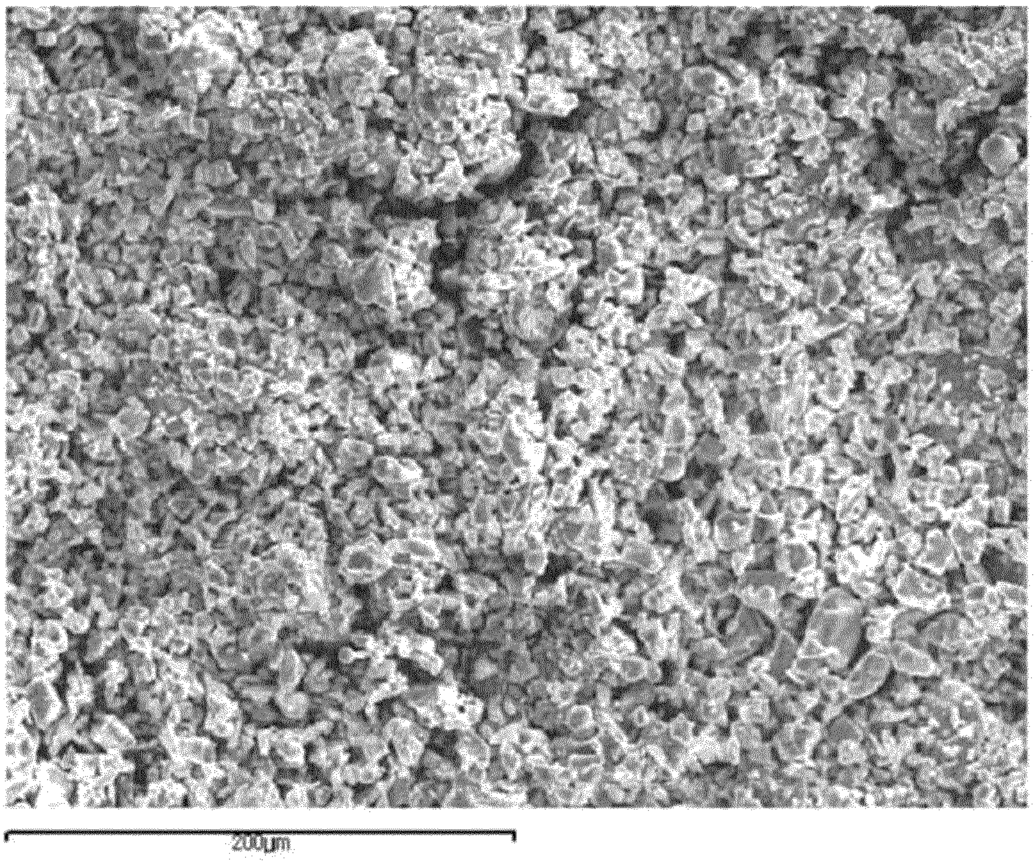

FIG. 8

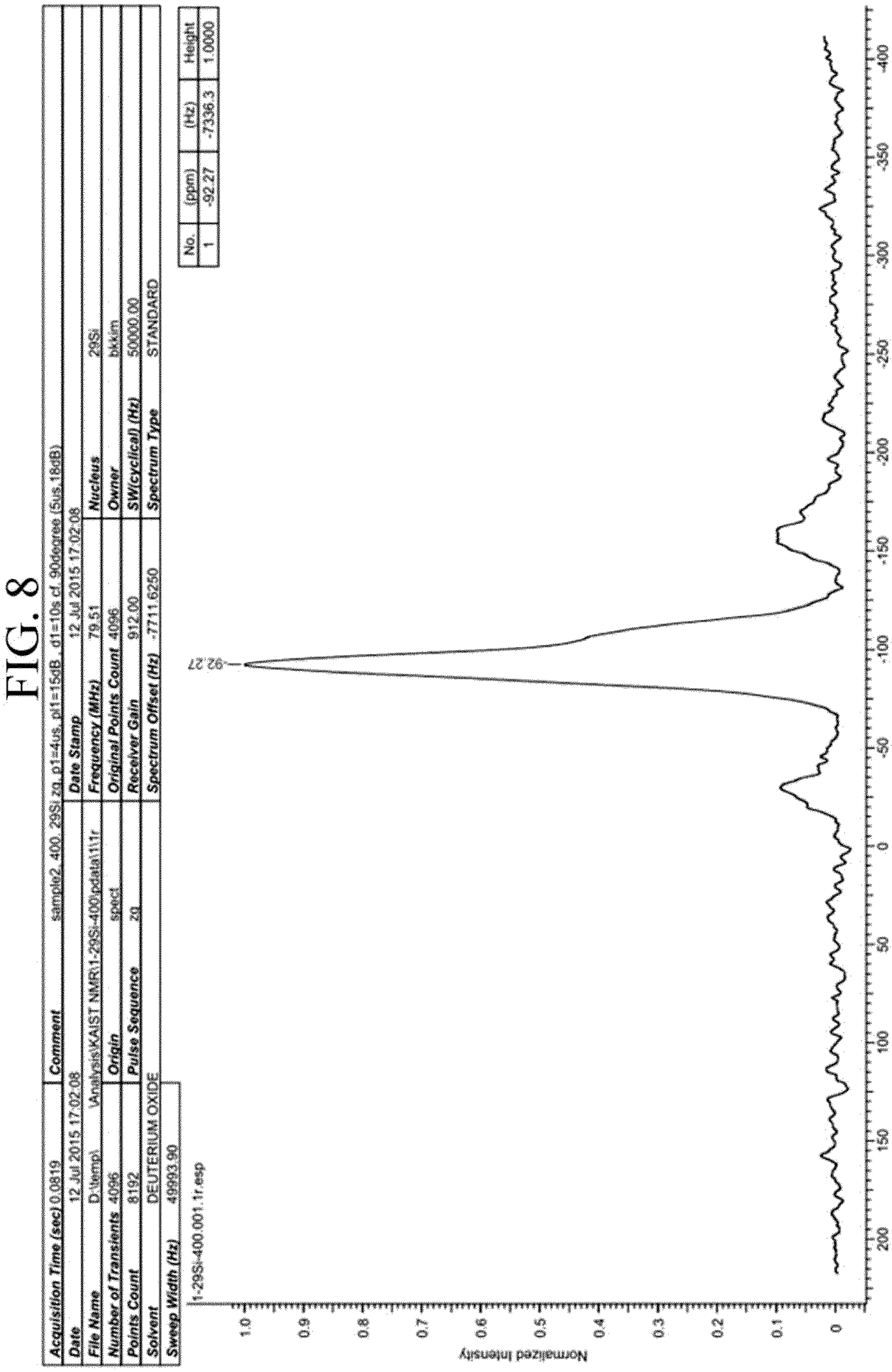
Acquisition Time (sec) 0.0819
Comment sample2_400_29Si zg, p1=4us, pl1=15dB , d1=10s cf. 90degree (5us,18dB)
Date 12 Jul 2015 17:02:08
Date Stamp 12 Jul 2015 17:02:08
File Name D:\temp\ \Analysis\KAIST NMR\1-29Si-400\pdata\1\1r
Nucleus 29Si
Number of Transients 4096
Frequency (MHz) 79.51
Origin spect
Owner bkkim
Points Count 8192
Original Points Count 4096
Pulse Sequence zg
SW(cyclical) (Hz) 50000.00
Solvent DEUTERIUM OXIDE
Receiver Gain 912.00
Spectrum Type STANDARD
Sweep Width (Hz) 49993.90
Spectrum Offset (Hz) -7711.6250
1-29Si-400.001.1r.esp
No. (ppm) (Hz) Height
1 -92.27 -7336.3 1.0000
-92.27
Normalized Intensity
Chemical Shift (ppm)

FIG. 9

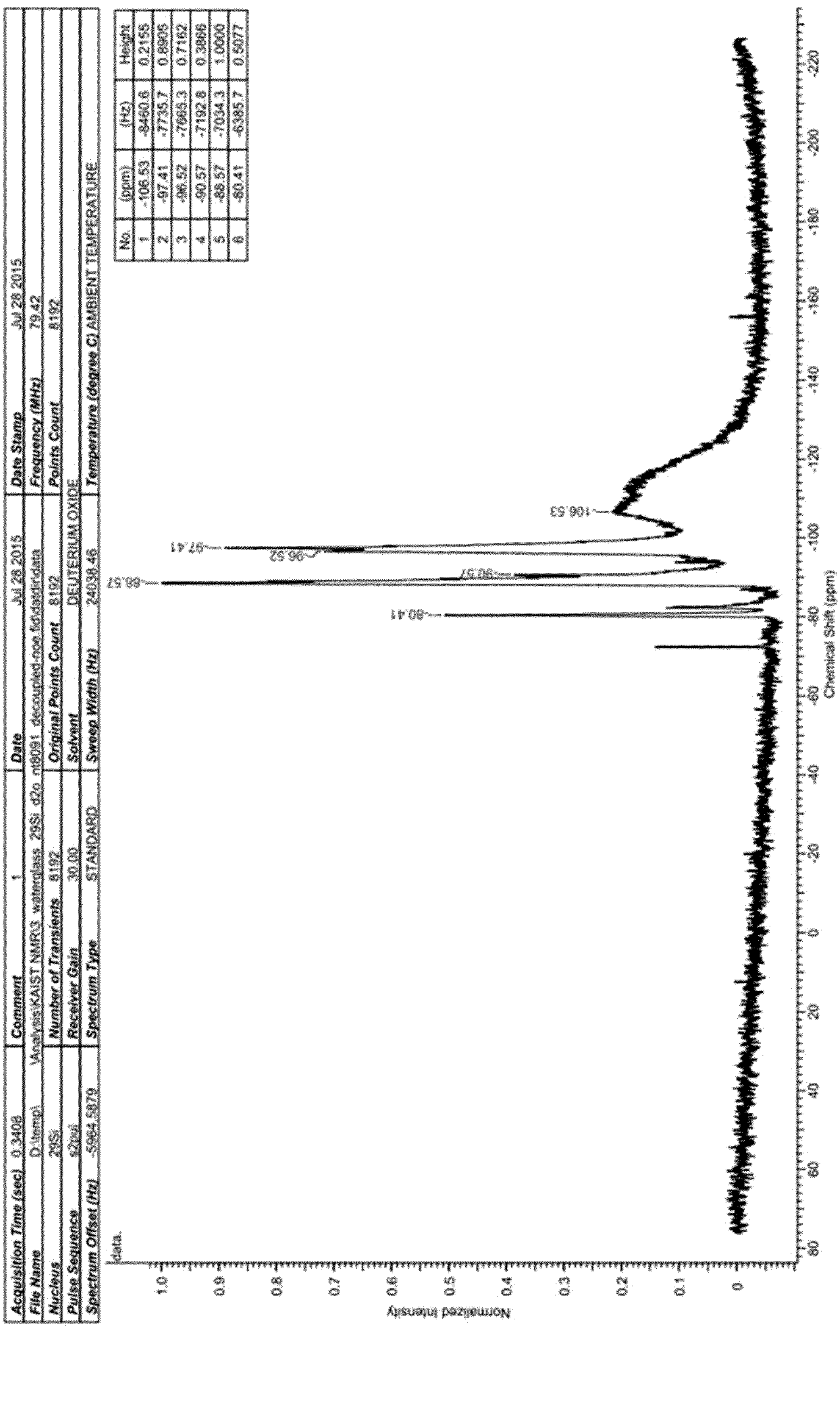
Acquisition Time (sec) 0.3408
Comment 1
Date Jul 28 2015
Date Stamp Jul 28 2015
File Name D:\temp\Analysis\KAIST NMR\3 waterglass 29Si d2o nt8091 decoupled-noe.fid\datdir\data
Frequency (MHz) 79.42
Nucleus 29Si
Number of Transients 8192
Original Points Count 8192
Points Count 8192
Pulse Sequence s2pul
Receiver Gain 30.00
Solvent DEUTERIUM OXIDE
Spectrum Offset (Hz) -5964.5879
Spectrum Type STANDARD
Sweep Width (Hz) 24038.46
Temperature (degree C) AMBIENT TEMPERATURE
data.
No. (ppm) (Hz) Height
1 -106.53 -8460.6 0.2155
2 -97.41 -7735.7 0.8905
3 -96.52 -7665.3 0.7162
4 -90.57 -7192.8 0.3866
5 -88.57 -7034.3 1.0000
6 -80.41 -6385.7 0.5077
-106.53
-97.41
-96.52
-90.57
-88.57
-80.41
Normalized Intensity
Chemical Shift (ppm)

FIG. 10

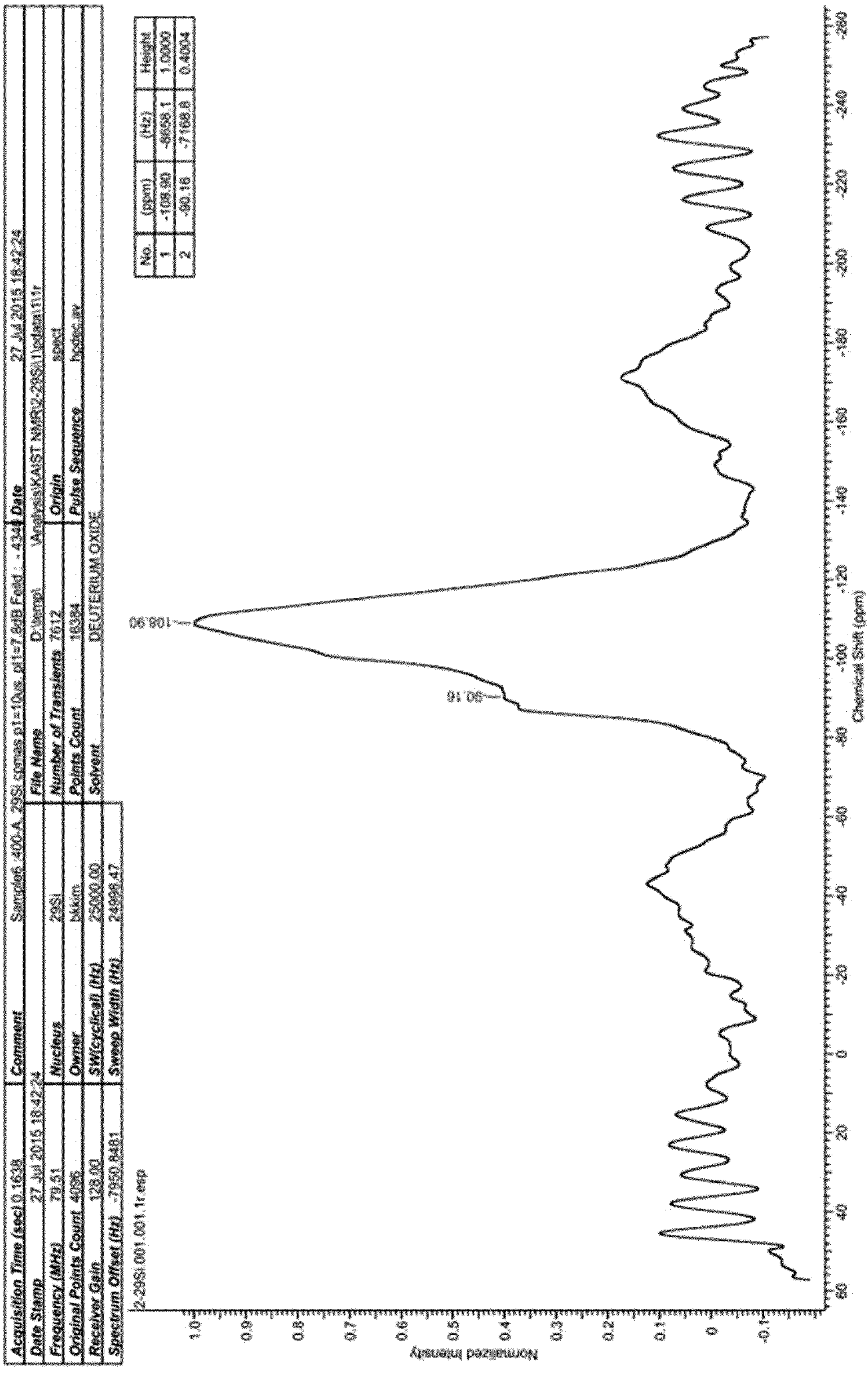

Acquisition Time (sec) 0.1638
Comment Sample6 400-A 29Si cpmas p1=10us, pl1=7.8dB Feild : - 4340
Date 27 Jul 2015 18:42:24
Date Stamp 27 Jul 2015 18:42:24
File Name D:\temp\Analysis\KAIST NMR\2-29Si\1\pdata\1\1r
Frequency (MHz) 79.51
Nucleus 29Si
Number of Transients 7612
Origin spect
Original Points Count 4096
Owner bkkim
Points Count 16384
Pulse Sequence hpdec.av
Receiver Gain 128.00
SW(cyclical) (Hz) 25000.00
Solvent DEUTERIUM OXIDE
Spectrum Offset (Hz) -7950.8481
Sweep Width (Hz) 24998.47
2-29Si.001.001.1r.esp
No. (ppm) (Hz) Height
1 -108.90 -8658.1 1.0000
2 -90.16 -7168.8 0.4004
108.90
90.16
Normalized Intensity
Chemical Shift (ppm)

FIG. 11

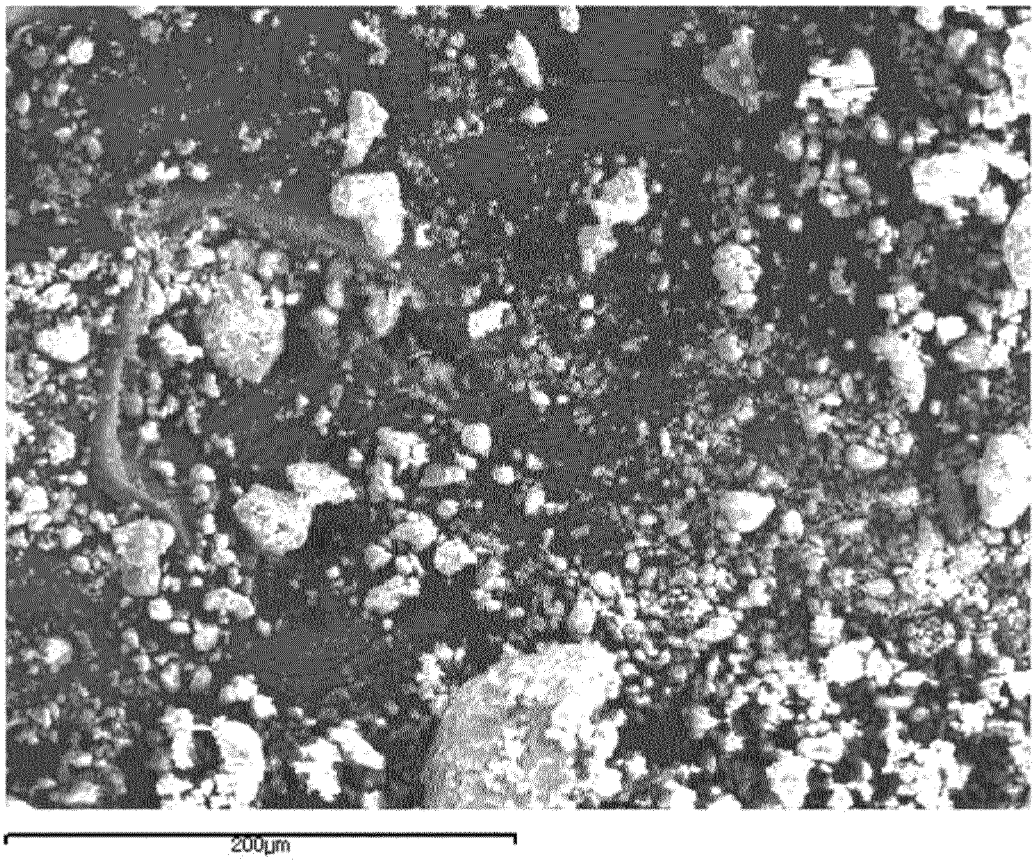

FIG. 12

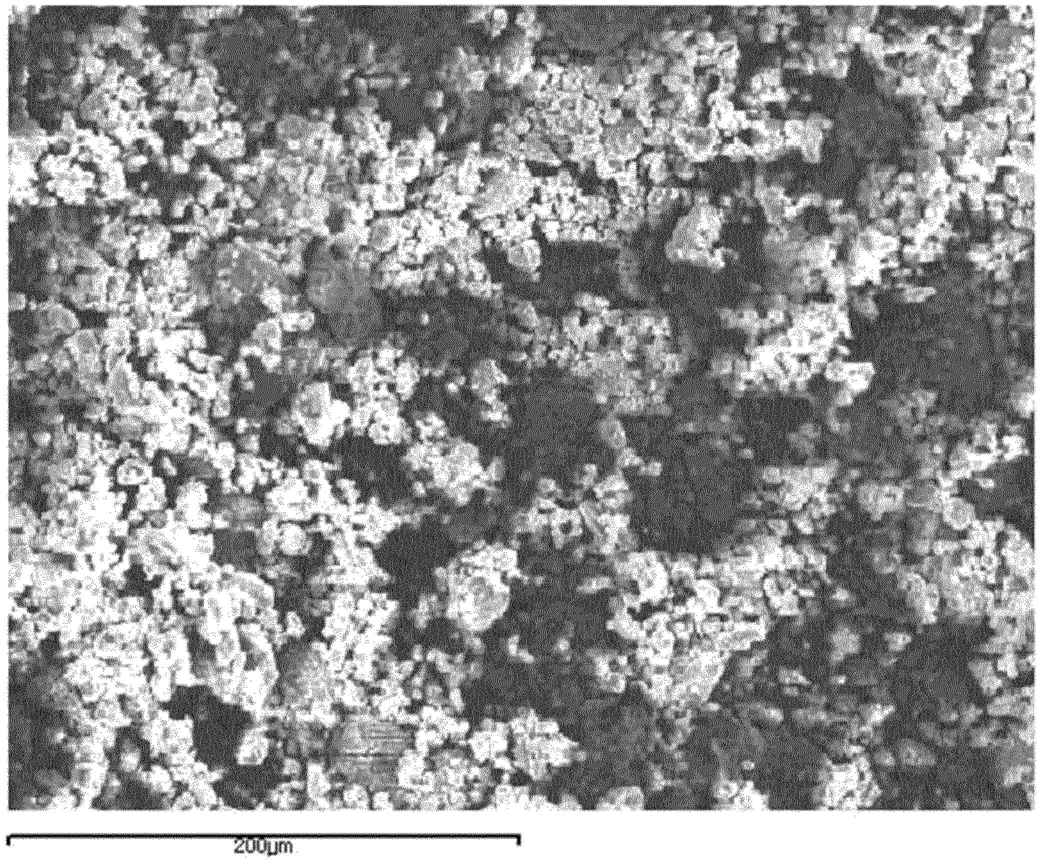

FIG. 13

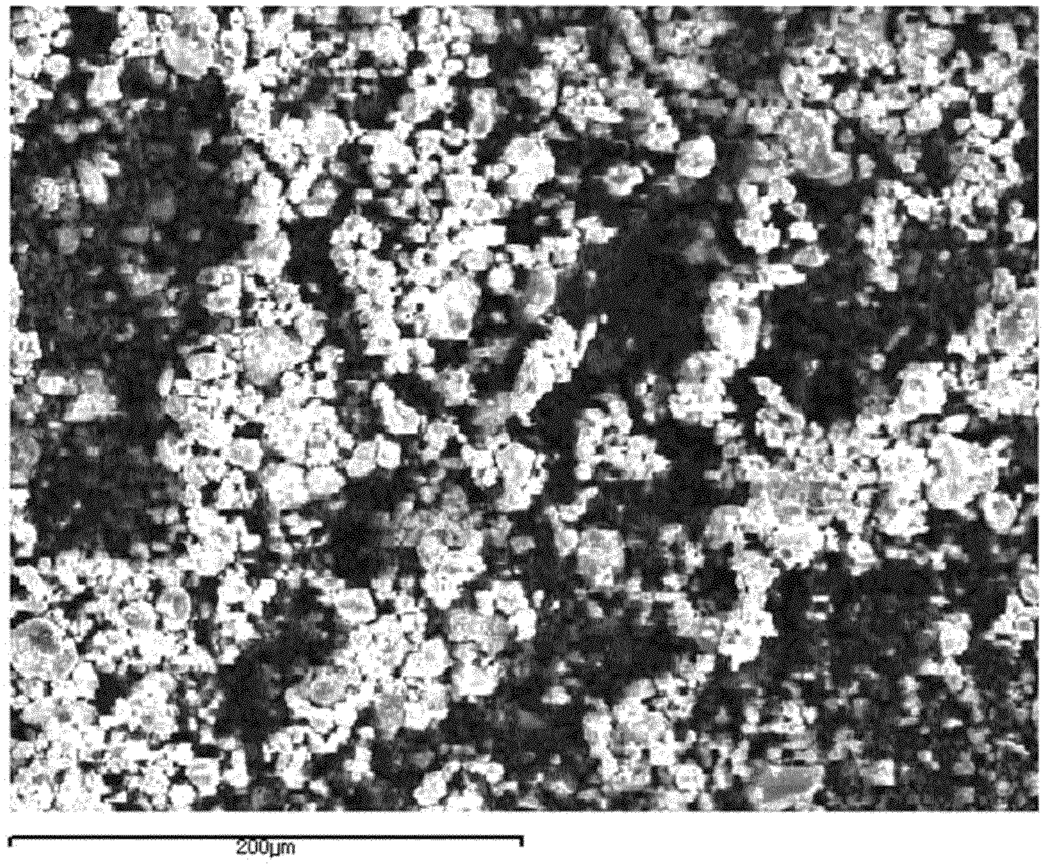

FIG. 14

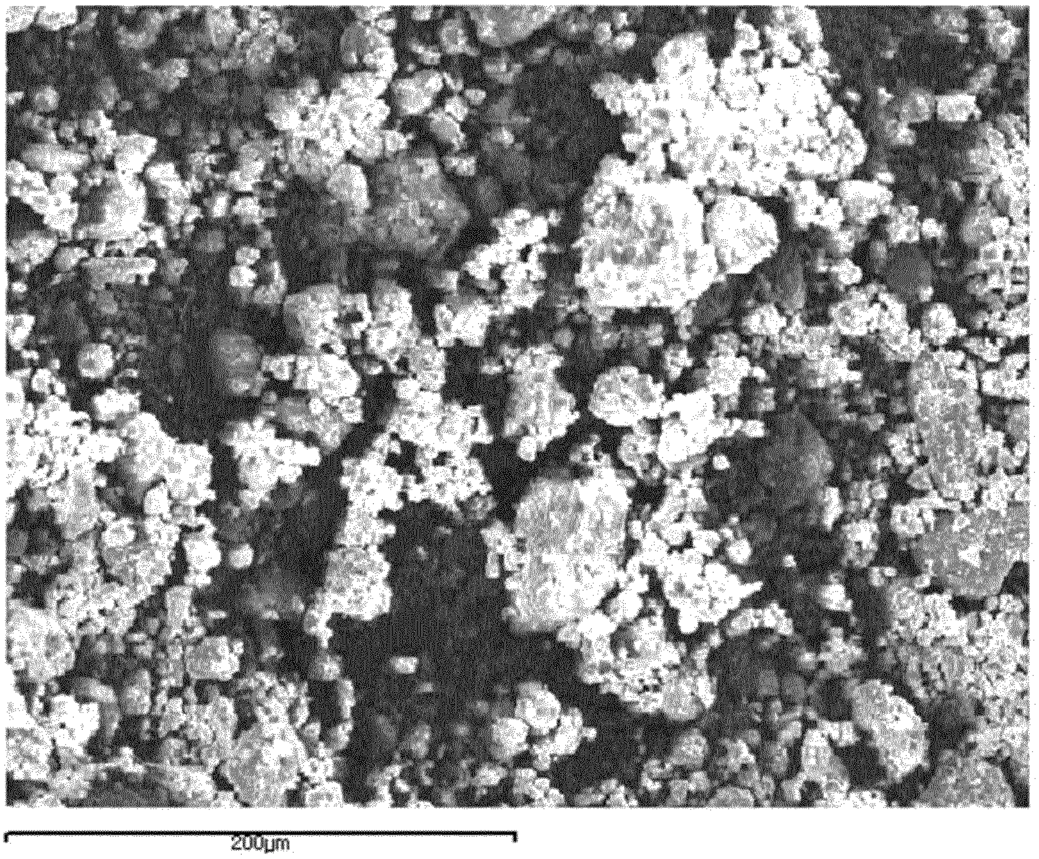

## INTERNATIONAL SEARCH REPORT

International application No.
**PCT/KR2016/012937**

A. CLASSIFICATION OF SUBJECT MATTER
***C08K 3/22(2006.01)i, C08K 3/00(2006.01)i, C08J 9/22(2006.01)i, C08L 25/06(2006.01)i, C09K 21/02(2006.01)i, C09K 21/06(2006.01)i***
According to International Patent Classification (IPC) or to both national classification and IPC

B. FIELDS SEARCHED

Minimum documentation searched (classification system followed by classification symbols)
C08K 3/22; C09D 1/02; C09D 5/00; B01D 53/86; B29C 67/20; C04B 35/63; C08J 9/232; C04B 12/04; C04B 28/26; C04B 35/16; B01J 35/02; C08K 3/00; C08J 9/22; C08L 25/06; C09K 21/02; C09K 21/06

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: flame retardant, cenosphere, fly ash, ceramic microsphere, cleaned ash, unburned carbon, dried gel, inorganic particle, titanium oxide, siloxane, heat treatment, pulverization, styrofoam, adhesive layer

C. DOCUMENTS CONSIDERED TO BE RELEVANT

| Category* | Citation of document, with indication, where appropriate, of the relevant passages | Relevant to claim No. |
|---|---|---|
| X | JP 3677090 B2 (TAIHEIYO CEMENT CORPORATION) 27 July 2005<br>See paragraphs [0005]-[0015]; and claims 1-6. | 1-4 |
| Y | | 5-7,18-20 |
| A | | 8-17 |
| Y | KR 10-0853818 B1 (JUNGMAC IND. R&D LTD.) 22 August 2008<br>See abstract; paragraphs [0021]-[0091]; and claim 1. | 5-7,18-20 |
| A | JP 3715669 B2 (SEKISUI CHEM. CO., LTD. et al.) 09 November 2005<br>See paragraphs [0006]-[0026]; and claim 1. | 1-20 |
| A | JP 2009-521350 A (KYUNGDONG CERATECH CO., LTD.) 04 June 2009<br>See paragraph [0021]; and claim 1. | 1-20 |
| A | JP 2000-063172 A (ODA KENSETSU KK.) 29 February 2000<br>See paragraphs [0008]-[0014]; and claims 1-8. | 1-20 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 FEBRUARY 2017 (09.02.2017) | **14 FEBRUARY 2017 (14.02.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (January 2015)

**INTERNATIONAL SEARCH REPORT**
Information on patent family members

International application No.
**PCT/KR2016/012937**

| Patent document cited in search report | Publication date | Patent family member | Publication date |
|---|---|---|---|
| JP 3677090 B2 | 27/07/2005 | JP 09-048654 A | 18/02/1997 |
| KR 10-0853818 B1 | 22/08/2008 | KR 10-0881111 B1 | 02/02/2009 |
| | | KR 10-2008-0070485 A | 30/07/2008 |
| | | KR 10-2008-0070501 A | 30/07/2008 |
| | | KR 10-2008-0070502 A | 30/07/2008 |
| | | WO 2008-091129 A1 | 31/07/2008 |
| | | WO 2008-091131 A1 | 31/07/2008 |
| JP 3715669 B2 | 09/11/2005 | JP 08-196902 A | 06/08/1996 |
| JP 2009-521350 A | 04/06/2009 | CN 101360778 A | 04/02/2009 |
| | | KR 10-0650544 B1 | 28/11/2006 |
| | | US 2009-0081459 A1 | 26/03/2009 |
| | | WO 2007-091853 A1 | 16/08/2007 |
| JP 2000-063172 A | 29/02/2000 | NONE | |

Form PCT/ISA/210 (patent family annex) (January 2015)